# EUROPÄISCHE PATENTSCHRIFT

(11) **EP 4 337 454 B1**
(45) Veröffentlichungstag und Bekanntmachung des Hinweises auf die Patenterteilung: **28.10.2026**
(21) Anmeldenummer: 22805800.4
(22) Anmeldetag: 14.10.2022
(51) Int. Cl.: B29D 11/00

(54) **BRILLENGLASHERSTELLUNG MIT ADAPTIVEN FLÄCHEN UND VORRICHTUNG DAFÜR**
MANUFACTURING A SPECTACLE LENS USING ADAPTIVE SURFACES AND APPARATUS THEREOF
FABRICATION DE VERRE DE LUNETTES AVEC DES SURFACES ADAPTATIVES ET DISPOSITIF PRÉVU À CET EFFET

(30) Priorität: 14.10.2021 DE 102021126599
(43) Veröffentlichungstag der Anmeldung: 20.03.2024
(73) Patentinhaber: Rodenstock GmbH, 80687 München (DE)
(72) Erfinder: GROMANN, Lukas, 85354 Freising (DE); TRUMM, Stephan, 80999 München (DE)
(74) Vertreter: Müller-Boré & Partner Patentanwälte PartG mbB
(86) Internationale Anmeldenummer: PCT/EP2022/078663
(87) Internationale Veröffentlichungsnummer: WO 2023/062194

(56) Entgegenhaltungen:
- US-A1- 2005 264 756
- US-A1- 2009 146 331

## Beschreibung

Brillengläser werden konventionell aus Halbfertigprodukten mit einer fertigen Fläche hergestellt, wobei die gegenüberliegende Fläche (Rx-Fläche oder Rezeptfläche genannt) in Abhängigkeit vom Rezept maschinell fertig bearbeitet wird. Ein Nachteil dieser Vorgehensweise ist, dass in der Regel Halbfertigprodukte in großen Stückzahlen vorgehalten und für den nächsten Schritt an einen anderen Standort transportiert werden müssen, was hohe Lager- und Logistikkosten verursacht. Weiterhin ist die maschinelle Bearbeitung der Rezeptfläche ein hochkomplexer Prozess, der viele Einzelschritte umfasst und aufwändige Maschinen erfordert. Dies ist mit hohem technischen und Investitionsaufwand verbunden. Neben dem technischen Aufwand ist dieser Prozess an verschiedenen Stellen umwelttechnisch/gesundheitlich nicht optimal. Zum Beispiel kann beim Schleifen Mikroplastik entstehen. Ferner werden beim Blocken umweltschädliche niederschmelzende Legierungen zum Befestigen der zu bearbeitenden Gläser am Blocker verwendet.

Eine andere Möglichkeit, Brillengläser herzustellen, ist mittels eines additiven Verfahrens (3D Druckverfahrens). Bei den bekannten Verfahren der additiven Fertigung gibt es jedoch starke Einschränkungen in Bezug auf die verwendbaren Materialien (nur sehr spezielle Materialien können derzeit mit 3D-Druckverfahren verarbeitet werden), auf die Geometrie der Gläser (z.B. durch die notwendige BasisSchicht und die Randbedingungen des 3D Druckverfahrens bezüglich Flächen und Volumenformen), auf die Bearbeitungszeit (sehr hohe Bearbeitungszeit durch elementweises Aufbringen bzw. Aushärtung des Materials) und auf die Qualität.

Aus DE 10 236 714 A1 ist ferner ein Verfahren und eine Vorrichtung zum Gießen von optischen Linsen aus einem aushärtbaren Kunststoffmaterial bekannt. Bei diesem Verfahren werden zwei Formschalen mit Oberflächen vorbestimmter Form im Abstand voneinander angeordnet und an ihrem Umfang abgedichtet. Das Kunststoffmaterial wird in den von den Oberflächen eingeschlossenen Zwischenraum zwischen den Formschalen eingebracht. Mindestens eine der Oberflächen der Formschalen wird in Abhängigkeit von vorgegebenen Daten unmittelbar vor dem Einbringen des Kunststoffmaterials aus einer Ausgangsform in die vorbestimmte Form umgeformt. Als verformbare Oberfläche wird eine adaptive Fläche eingesetzt. Nachteile des in der Druckschrift DE 10 236 714 A1 beschriebenen Verfahrens sind jedoch der hohe Preis für die zur Verformung der adaptiven Fläche eingesetzten Aktuatoren bei langer Aushärtezeit für das Brillenglas, die hohe thermische Belastung der adaptiven Formschalen und somit der Aktuatoren während dem Aushärten des Brillenglases, und die starke Volumenverminderung (typischerweise ungefähr 10%) beim Aushärten des Brillenglases und damit verbundene starke Kräfte, die auf die adaptive Formschale und die Aktuatoren wirken.

Die Druckschrift US 2005/264756 A1 beschreibt eine Vorrichtung und ein Verfahren zur Herstellung kundenspezifischer Kontaktlinsen und Formen, wobei eine rekonfigurierbare Form einen Hohlraum mit einer verformbaren Oberfläche aufweist. Die Oberfläche wird durch eine Anordnung von Aktuatoren verformt, um eine bestimmte Oberflächenkontur zu definieren. Die spezifizierte Oberflächenkontur kann einem formbaren Material verliehen werden, das in dem Hohlraum abgelagert ist, und die Anordnung von Stellgliedern kann neu positioniert werden, um die durch die individuelle Kontaktlinse bereitgestellte Sehkorrektur zu optimieren.

Der Erfindung liegt die Aufgabe zugrunde, ein verbessertes Verfahren zum Herstellen von Brillengläsern bereitzustellen. Insbesondere liegt der Erfindung die Aufgabe zugrunde, die Herstellung beider Flächen von qualitativ hochwertigen Rezeptgläsern (insbesondere mit mindestens einer individuellen Fläche) in einem Fertigungsschritt zu ermöglichen.

Diese Aufgabe wird durch ein Verfahren und eine Vorrichtung zum Herstellen von Brillengläsern mit den Merkmalen der unabhängigen Ansprüche gelöst. Bevorzugte Beispiele sind Gegenstand der abhängigen Ansprüche.

Ein erster Aspekt der Erfindung betrifft ein Verfahren zum Herstellen eines Brillenglases, umfassend:
Erfassen von Daten einer zu erzeugenden Oberfläche des herzustellenden Brillenglases;
Bereitstellen einer ersten Gießform für das herzustellende Brillenglas, wobei die erste Gießform eine erste Gießformfläche aufweist, deren Form in Abhängigkeit von den Daten der zu erzeugenden Oberfläche des Brillenglases bestimmt wird;
Formen des Brillenglases aus einem aushärtbaren Brillenglasmaterial unter Verwendung der ersten Gießform,
wobei das Bereitstellen der ersten Gießform umfasst:
   Bestimmen der Form einer adaptiven Fläche anhand der Daten der zu erzeugenden Oberfläche des Brillenglases;
   Erzeugen der adaptiven Fläche mit der bestimmten Form mit Hilfe einer Flächenverformungsvorrichtung;
   Verwenden der adaptiven Fläche, um die erste Gießformfläche zu erzeugen oder zu bilden;
   wobei das Formen des Brillenglases umfasst:
      Aushärten des Brillenglasmaterials, wobei während des Aushärtens die Flächenverformungsvorrichtung von der ersten Gießform getrennt ist.

Ein zweiter Aspekt betrifft eine Vorrichtung zum Herstellen eines Brillenglases, welche ausgebildet ist, das Verfahren zum Herstellen eines Brillenglases gemäß dem ersten Aspekt durchzuführen. Insbesondere umfasst die Vorrichtung zum Herstellen eines Brillenglases:
eine Erfassungsvorrichtung zum Erfassen von Daten einer zu erzeugenden Oberfläche des herzustellenden Brillenglases;
eine erste Gießform, wobei die erste Gießform eine erste Gießformfläche aufweist, die anhand der Daten der zu erzeugenden Oberfläche des herzustellenden Brillenglases geformt ist; und
eine Gießformflächenerzeugungsvorrichtung zum Erzeugen oder Bilden der ersten Gießformfläche, wobei die Gießformflächenerzeugungsvorrichtung
   eine adaptive Fläche;
   eine Flächenformbestimmungsvorrichtung zum Bestimmen der Form der adaptiven Fläche anhand der Daten der zu erzeugenden Oberfläche des Brillenglases; und
   eine Flächenverformungsvorrichtung zum Verformen der zumindest
einer adaptiven Fläche entsprechend der bestimmten Form.

Die Vorrichtung zum Herstellen eines Brillenglases ist ferner derart ausgebildet, dass die Flächenverformungsvorrichtung während des Aushärtens von der ersten Gießform getrennt ist. Die Vorrichtung umfasst dementsprechend eine Trennvorrichtung zum Abtrennen der Flächenverformungsvorrichtung von der ersten Gießform.

Adaptive Flächen sind Flächen, deren Form nicht nur einmalig sondern wiederholt und kontrolliert veränderbar ist. Die Form der adaptiven Fläche kann zum Beispiel global oder lokal veränderbar sein. Adaptive Flächen werden vor allem im Bereich der adaptiven Optiken verwendet, jedoch nur um direkt, und oft auch dynamisch, eine aktive optische Oberfläche (meist von Spiegeln) zu realisieren.

Gemäß den obigen Aspekten der Erfindung werden adaptive Flächen zum Herstellen von Brillengläsern, insbesondere im Rahmen eines (Ab)Gießprozesses verwendet. Die Form der adaptiven Fläche wird dabei für jedes herzustellende Brillenglas beziehungsweise für jede zu erzeugende Oberfläche des herzustellenden Brillenglases speziell bestimmt und mittels einer Flächenverformungsvorrichtung eingestellt. Anders ausgedrückt wird eine adaptive Fläche mit einer zuvor bestimmten Form mit Hilfe einer Flächenverformungsvorrichtung erzeugt. Nach der Einstellung der Form der adaptiven Fläche wird diese direkt oder indirekt verwendet, um eine für das Brillenglas speziell bestimmte Gießformfläche einer Gießform (der ersten Gießform) zu erzeugen oder zu bilden. Dadurch können zum Beispiel bereits beim Gießen des Brillenglases beide Flächen des Brillenglases mit hoher Qualität in der gewünschten Form (auch hochgradig individuell) erzeugt werden. Die derzeit notwendige maschinelle Bearbeitung der Rezeptfläche (umfassend z.B. Aufblocken, Schleifen und Polieren) kann weitgehend entfallen.

Ferner ist erfindungsgemäß die zur Verformung der adaptiven Fläche eingesetzte Flächenverformungsvorrichtung während des Aushärtens des Brillenglasmaterials von der ersten Gießform getrennt.

Ein Vorteil der Trennung der Flächenverformungsvorrichtung von der Gießform liegt darin, dass insbesondere bei dicken Gläsern, wie z.B. Brillengläsern, die beim Gießschrumpf auftretenden Kräfte nicht mehr auf Aktuatoren bzw. eine Aktuatorvorrichtung der Flächenverformungsvorrichtung übertragen werden können. Vorteilhafterweise wird dadurch dort eine entsprechende Alterung bzw. Materialermüdung durch die mechanische Beanspruchung verhindert. Des Weiteren wird eine Verschiebung bzw. Verformung der eingestellten Fläche verhindert, wodurch insbesondere eine erhöhte Fertigungsgenauigkeit erreichbar ist.

Die Trennung kann zumindest eine kraftschlüssige Trennung sein, bei der eine Kraftübertragung zwischen der ersten Gießform und der Flächenverformungsvorrichtung während des Aushärtens des Brillenglasmaterials unterbrochen ist.

Die Trennung kann auch eine räumliche beziehungsweise vollständige Trennung sein, bei der die erste Gießform und die Flächenverformungsvorrichtung während des Aushärtens des Brillenglasmaterials voneinander räumlich beziehungsweise vollständig getrennt sind. Bei einer räumlichen Trennung wird auch der Kraftschluss zwischen der ersten Gießform und der Flächenverformungsvorrichtung unterbrochen.

Eine räumliche Trennung kann zum Beispiel dadurch realisiert werden, dass die adaptive Fläche, wie nachfolgend beschrieben, indirekt zum Erzeugen zumindest einer der Flächen der adaptiven Form verwendet wird. Bei einer direkten Verwendung der adaptiven Fläche als zumindest einen Teil einer Fläche der ersten Gießform kann die Flächenverformungsvorrichtung nach dem Einstellen der gewünschten Form der adaptiven Fläche aktiv von der adaptiven Fläche getrennt beziehungsweise abgezogen werden. Selbstverständlich kann eine aktive räumliche Trennung der Flächenverformungsvorrichtung von der adaptiven Fläche auch bei einem indirekten Verfahren verwirklicht werden.

Bei einer direkten Verwendung der adaptiven Fläche als zumindest ein Teil einer Fläche der ersten Gießform ergibt sich durch die (mechanische) Trennung von Flächenverformungsvorrichtung und erster Gießform der Vorteil, dass die Flächenverformungsvorrichtung von den Kräften entlastet wird, die durch den Gießschrumpf beim Aushärten des Brillenglasmaterials in der Gießform auftreten. Die Entlastung kann vorteilhafterweise ohne einen zusätzlichen Zwischenschritt bzw. ein zusätzliches Zwischenprodukt erfolgen, wie beispielsweise das Erzeugen einer, insbesondere starren, Zwischengießform, welche zur Ausbildung des herzustellenden Brillenglases genutzt werden kann. Des Weiteren sind auch keine weiteren Elemente nötig, wie beispielsweise Abstandhalter oder Pufferelemente, welche die bei der Schrumpfung des Brillenglasmaterials entstehenden Kräften aufnehmen.

Durch die kraftschlüssige Trennung der Flächenverformungsvorrichtung von der ersten Gießform während des Aushärtens des Brillenglasmaterial kann verhindert werden, dass die Flächenverformungsvorrichtung und insbesondere die Aktuatorvorrichtung der Flächenverformungsvorrichtung starken mechanischen Kräften und/oder thermischer Einwirkung während des Aushärtens des Brillenglasmaterials ausgesetzt sind. Dadurch können die Anforderungen an die Flächenverformungsvorrichtung und insbesondere die Aktuatorvorrichtung gesenkt werden. Bei einer räumlichen Trennung der Flächenverformungsvorrichtung von der ersten Gießform kann zusätzlich die Flächenverformungsvorrichtung zur Verformung einer anderen adaptiven Fläche eingesetzt werden, ohne auf das Aushärten des Brillenglases abwarten zu müssen. Dadurch kann die Wirtschaftlichkeit des Herstellungsverfahrens wesentlich erhöht werden.

Durch die Erfindung werden somit einer oder mehrere der folgenden Vorteile erzielt:
Einfache Fertigung von beiden Flächen qualitativ hochwertiger Verordnungsgläser (Rx-Gläser), insbesondere Brillengläser mit mindestens einer individuellen Fläche, in einem Fertigungsschritt;
Keine kostspielige und aufwendige Lagerhaltung und Logistik von Blanks;
Keine aufwändige maschinelle Bearbeitung der Rezeptfläche mit teuren Maschinen,
Bessere Umweltverträglichkeit durch die Vermeidung oder Minimierung der Verwendung von niederschmelzenden Legierungen und die Vermeidung oder Minimierung der Entstehung von Mikroplastik bei der Herstellung;
Vermeidung der oben genannten Nachteile bekannter Lösungen (wie z.B. der aus der DE 10 236 714 A1 bekannten Lösung), wie hoher Preis für die eine adaptive Fläche aufweisenden Gießformen und insbesondere für die Aktuatoren bei langer Aushärtezeit für das Brillenglas, hohe thermische Belastung der Aktuatoren während dem Aushärten des Brillenglases, starke Volumenverminderung (typischerweise ungefähr 10%) beim Aushärten des Brillenglases und damit verbundene starke Kräfte auf die Gießform mit der adaptiven Fläche und die Aktuatoren.

Die Individualisierbarkeit und Vielfallt der Flächenformen entsprechen oder sogar übertreffen dabei den mit konventioneller Freiformtechnik (wie zum Beispiel spanende CNC Technik) Erreichbarem bei einem geringeren technischen und logistischen Aufwand.

Das eingesetzte Verfahren zum Formen des Brillenglases unter Verwendung der ersten, mit Hilfe einer adaptiven Fläche realisierten Gießform kann ein beliebiges Verfahren sein, bei dem die erste Gießform mit der speziell bestimmten ersten Gießfläche zur Formgebung einer Oberfläche des Brillenglases verwendet wird. Beispielhafte Verfahren sind Gießverfahren (wie zum Beispiel Abgießen, Spritzgießen, Angießen, etc.), Prägen, etc.

### Erste Gießform

Die erste Gießform kann in üblicher Weise Bestandteil eines Gießformwerkzeugs (Gießformpakets) umfassend zwei miteinander verbundene Gießformen (die erste Gießform und eine zweite Gießform (Gegengießform)) sein. Die Gießformen (auch Formschallen oder Gießformschallen genannt) sind in einem Abstand zueinander angeordnet und an ihrem Umfang abgedichtet. Der von den Gießformen umschlossene und abgedichtete Hohlraum kann mit einem aushärtbaren Material (zum Beispiel Kunststoff) befüllt werden. Die zwei gegenüberliegenden Innenflächen des Gießformwerkzeugs, welche mit dem aushärtbaren Material (direkt oder über zumindest eine Vermittlungsschicht) in Kontakt treten, werden im Rahmen der vorliegenden Anmeldung als Gießformflächen bezeichnet. Die Vermittlungsschicht kann zum Beispiel eine Haftvermittlungsschicht sein, welche das Haften zwischen dem ausgehärteten Brillenglasmaterial und der Gießformfläche beeinflusst, zum Beispiel reduziert oder erhöht. Beispielsweise kann die Vermittlungsschicht eine Trennungsschicht sein, welche das Trennen des ausgehärteten Brillenglasmaterials von den Gießformen erleichtert. Die erste Gießform kann auch zum Prägen und somit Formen einer zu erzeugenden Fläche des herzustellenden Brillenglases verwendet werden.

Wie oben beschrieben wird zumindest eine der Gießformflächen der ersten Gießform speziell für ein herzustellendes Brillenglas anhand von erfassten Daten einer zu erzeugenden Oberfläche des Brillenglases, wie zum Beispiel der Rezeptfläche, geformt. Diese Gießformfläche wird im Rahmen der vorliegenden Anmeldung auch als speziell für das Brillenglas bestimmte Gießformfläche bezeichnet. Der Begriff "Erfassen" im Sinne der vorliegenden Anmeldung beinhaltet "Erhalten", "Auslesen", "Entnehmen einer Datenbank und/oder einer Tabelle", "Bereitstellen", "Empfangen", "Berechnen" und so weiter. Der Begriff "Bestimmen" im Sinne der vorliegenden Anmeldung beinhaltet "Festlegen", "Ermitteln", "Berechnen", "Abschätzen", "Auswählen" und so weiter.

Die speziell für das Brillenglas bestimmte Gießformfläche kann zum Beispiel im Wesentlichen ein Negativ der zu erzeugenden Oberfläche (wie zum Beispiel Rezeptfläche) des Brillenglases sein, wobei Verformungen oder Verzüge während der Herstellung des Brillenglases und insbesondere während des Aushärtens des Brillenglases vorkompensiert beziehungsweise einkalkuliert werden können.

Die erfassten Daten der zu erzeugenden Oberfläche des Brillenglases können beliebige Daten sein, welche die zu erzeugende Oberfläche beschreiben oder anhand derer die zu erzeugende Oberfläche des Brillenglases generiert werden kann. Die Daten der zu erzeugenden Oberfläche des Brillenglases können beispielsweise die Pfeilhöhen sowie gegebenenfalls Korrekturwerte umfassen. Die Pfeilhöhen können in diskreter Form vorliegen, durch eine mathematische Funktion (zum Beispiel Spline-Funktion oder Polynomfunktion), ein Modell oder in einer anderen geeigneten Art beschrieben werden. Die zu erzeugende Oberfläche des Brillenglases kann zum Beispiel die Rezeptfläche sein, wobei die Rezeptfläche in an sich bekannter Weise anhand von Rezeptdaten (umfassend eine Sphäre, einen Zylinder, ein Prisma und/oder eine Addition) sowie gegebenenfalls zusätzlichen individuellen Parametern des Brillenglases bestimmt werden kann.

Die speziell für das Brillenglas bestimmte Gießformfläche (d.h. die erste Gießformfläche) der ersten Gießform wird mit Hilfe einer adaptiven Fläche geformt beziehungsweise erzeugt oder gebildet. Dabei können, wie nachfolgend in Detail beschrieben, beliebige direkte oder indirekte Verfahren zum Formen der speziell für das Brillenglas bestimmten Gießformfläche unter Verwendung der adaptiven Fläche eingesetzt werden. Beispielhafte Verfahren zum Formen des Brillenglases und/oder zum Formen beziehungsweise Erzeugen oder Bilden der ersten Gießformfläche sind Gießverfahren (wie zum Beispiel Abgießen, Spritzgießen, Angießen, etc.), Prägen, Stempeln, etc.

### Adaptive Fläche und Flächenverformungsvorrichtung

Wie oben beschrieben ist eine adaptive Fläche eine Fläche, deren Form nicht nur einmalig sondern wiederholt und kontrolliert (global oder lokal) veränderbar ist.

Die Form der adaptiven Fläche kann mittels einer Flächenverformungsvorrichtung kontrolliert verändert werden. Die Flächenverformungsvorrichtung kann eine Aktuatorvorrichtung mit zumindest einem Aktuator, eine Steuerungsvorrichtung zum Steuern und/oder Regeln der Aktuatorvorrichtung und optional eine Sensorvorrichtung zum Erfassen der Form der adaptiven Fläche umfassen. Die Steuerungsvorrichtung, die Sensorvorrichtung und die Aktuatorvorrichtung können einen Regelkreis bilden, wobei die Aktuatorvorrichtung von der Steuerungsvorrichtung anhand von Sensordaten aus der Sensorvorrichtung gesteuert und/oder geregelt wird.

Die adaptive Fläche und die Flächenverformungsvorrichtung können in unterschiedlicher Art und Weise realisiert werden.

Beispielsweise kann sich die adaptive Fläche aus mehreren Segmenten oder Flächenelementen zusammensetzen, wobei die Flächenelemente einzeln in deren Orientierung und/oder Form veränderbar sind, z.B. einzeln auslenkbar und/oder verformbar sind. Somit kann eine lokale und/oder globale Veränderung der adaptiven Fläche erzielt werden. Die einzelnen Segmente/Flächenelemente können mechanisch, pneumatisch, hydraulisch, piezoelektrisch, magnetisch, elektrostatisch oder in einer anderen geeigneten Art und Weise ausgelenkt und/oder verformt werden.

Die adaptive Fläche kann zum Beispiel die Oberfläche einer verformbaren Membran sein, wobei die Membran mechanisch, pneumatisch, hydraulisch, piezoelektrisch, magnetisch, elektrostatisch oder in einer anderen geeigneten Art und Weise lokal und/oder global verformbar ist. Die Membran kann zum Beispiel mittels einer Mehrzahl von räumlich verteilten (kleinen) Stempeln (zum Beispiel in Form von (Positions)Stiften, Zapfen, etc.) ausgelenkt und/oder verformt werden. Jeder Stempel ist dabei mit einem entsprechenden Abschnitt der verformbaren beziehungsweise flexiblen Membran verbunden beziehungsweise steht mit diesem Abschnitt in Kontakt.

Die Stempel sind ferner an eine Aktuatorvorrichtung der Flächenverformungsvorrichtung gekoppelt und werden von der Aktuatorvorrichtung bewegt beziehungsweise angetrieben. Die einzelnen Stempel können beispielsweise über mechanische (z.B. analog einer Mikrometerschraube), piezo-elektrische, magnetische (z.B. Magnet in Spule oder magnetische Membran durch Magnetfelder), elektrostatische oder andere geeignete Aktuatoren bewegt werden. Die Aktuatorvorrichtung kann dementsprechend zumindest einen mechanischen, piezoelektrischen, magnetischen oder elektrostatischen Aktuator umfassen, welcher eingerichtet ist, die Stempel zu bewegen (zum Beispiel zu verschieben und/oder auszulenken). In einem Beispiel kann die Aktuatorvorrichtung eine Vielzahl von Aktuatoren umfassen, wobei jeder Aktuator mit einem Stempel oder mit einer Gruppe von Stempeln gekoppelt ist. Es ist auch möglich, einen Aktuator zu verwenden, der seriell (das heißt nacheinander) mit den einzelnen Stempeln gekoppelt wird.

Ebenfalls ist es möglich, die Form der adaptiven Fläche global zu verändern, zum Beispiel durch Fluide oder piezoelektrisch.

Beispielhafte adaptive Flächen sowie Vorrichtungen und Verfahren zur Änderung der Form von adaptiven Flächen sind in den Druckschriften [1] bis [14] beschrieben, deren entsprechende Inhalte insoweit einen integralen Offenbarungsbestandteil der vorlegenden Anmeldung darstellen.
[1] https://en.wikipedia.org/wiki/Deformable_mirror
[2] https://www.thorlabs.com/images/Tablmages/AO_101_White_Paper.pdf
[3] H. W. Babcock: The Possibility of Compensating Astronomical Seeing, Publications of the Astronomical Society of the Pacific, Vol. 65, No. 386, p.229, 1953, doi:10.1086/126606,
[4] John W. Hardy: Adaptive Optics for Astronomical Telescopes, Oxford University Press, 1998, ISBN 978-0195090192
[5] François Roddier: Adaptive optics in astronomy, Cambridge Univ. Press, Cambridge 2004, ISBN 0-521-55375-X
[6] Ulrich Wittrock: Adaptive optics for industry and medicine, Springer, Berlin 2005, ISBN 3-540-23978-2
[7] Robert K.Tyson: Principles of adaptive optics, CRC Press, Third Edition, 2011, ISBN 978-1-4398-0858-0
[8] Martin J Booth: Adaptive optical microscopy: the ongoing quest for a perfect image, Light: Science & Applications (2014) 3, e165; doi:10.1038/Isa.2014.46
[9] Austin Roorda and Jacque L. Duncan: Adaptive Optics Ophthalmoscopy, Annual Review of Vision Science, Vol. 1: 19 -50 (Volume publication date November 2015), doi:10.1146/annurev-vision-082114-035357
[10] https://www.rp-photonics.com/deformable_mirrors.html
[11] http://www.mpia.de/homes/hippler/AOonline/C04/ao_online_04_01.html
[12] https://www.edmundoptics.de/knowledge-center/video/productoverviews/optotune-focus-tunable-lensesreview/
[13] https://www.photonics.com/Products/Electrically_Tunable_Lens_ETL/pr63989
[14] N. Hasan, A. Banerjee, H. Kim und C. H. Mastrangelo, "Tunable-focus lens for adaptive eyeglasses," Opt. Express 25, 1221-1233 (2017)

Zur Einstellung der adaptiven Fläche können herkömmliche Regelungs- und/oder Steuerungsverfahren und Vorrichtungen eingesetzt werden. Beispielsweise kann die geometrische Position der einzelnen Aktuatoren der Aktuatorvorrichtung über Positionsgeber erfasst und an das gewünschte Pfeilhöhenprofil des herzustellenden Brillenglases angepasst werden. Alternativ oder zusätzlich können die Aktuatorpositionen indirekt über ein Analysieren der adaptiven Fläche mittels Wellenfronsensoren justiert werden. In diesem Fall kann es vorteilhaft sein, wenn die adaptive Fläche reflektiert, um auf bekannte Regelungsverfahren, z.B. von adaptiven Spiegeln, zurückgreifen zu können. Die indirekte Methode zum Einstellen beziehungsweise Verformen der adaptiven Fläche kann insbesondere die Steifigkeit der adaptiven Fläche (zum Beispiel in Form einer verformbaren Membran) berücksichtigen.

Die adaptive Fläche kann direkt und indirekt zum Formen beziehungsweise zum Erzeugen oder Bilden einer Gießformfläche der ersten Gießform für das herzustellende Brillenglas verwendet werden. Die entsprechenden Verfahren werden nachfolgend als direktes und indirektes Verfahren bezeichnet.

Bei einem direkten Verfahren (zum Beispiel bei einem direkten Gießverfahren) wird die adaptive Fläche direkt als eine Gießformfläche oder als Teil einer Gießformfläche der ersten Gießform verwendet. Anders ausgedrückt bildet bei einer direkten Verwendung die adaptive Fläche die speziell für das Brillenglas bestimmte erste Gießformfläche oder zumindest einen Teil der speziell für das Brillenglas bestimmten ersten Gießformfläche. Die adaptive Fläche ist dabei im Wesentlichen ein Negativ der gewünschten Fläche (Rezeptfläche) des Brillenglases. Aus der ersten Gießform mit der adaptiven Fläche und einer zweiten Gießform (Gegengießform) kann ein Gießformwerkzeug (Gießformpaket) zusammengesetzt werden, der mit aushärtbaren Brillenglasmaterial (zum Beispiel aus Kunststoff) befüllbar ist.

Das Verfahren zum Herstellen eines Brillenglases kann dementsprechend
Bereitstellen eines Gießformwerkzeugs (Gießformpakets) umfassend die erste Gießform und eine zweite Gießform (Gegengießform), wobei die erste Gießform und die zweite Gießform einen Hohlraum umschließen; und
Auffüllen des Hohlraums des Gießformwerkzeugs mit einem aushärtbaren Brillenglasmaterial
umfassen.

Anschließend wird das aufgefüllte Brillenglasmaterial ausgehärtet.

Wie oben beschrieben ist die Flächenverformungsvorrichtung während des Aushärtens des Brillenglasmaterials von der ersten Gießform und somit auch von der adaptiven Fläche getrennt. Beispielsweise kann die Flächenverformungsvorrichtung während des Aushärtens des Brillenglasmaterials von der ersten Gießform räumlich beziehungsweise vollständig getrennt sein und zum Formen anderer adaptiven Flächen eingesetzt werden. Um dies zu ermöglichen, kann die Flächenverformungsvorrichtung und insbesondere die Aktuatorvorrichtung trennbar/lösbar an der ersten Gießform beziehungsweise an der adaptiven Fläche gekoppelt sein.

In einem Beispiel kann die Flächenverformungsvorrichtung bereits vor dem Auffüllen eines die erste Gießform umfassenden Gießwerkzeugs mit Brillenglasmaterial von der ersten Gießform (räumlich und/oder kraftschlüssig) getrennt werden. Ebenfalls ist es möglich, bereits vor dem Zusammensetzen des Gießformwerkzeugs aus der ersten Gießform und der Gegengießform, die Flächenverformungsvorrichtung von der ersten Gießform (kraftschlüssig und/oder räumlich) zu trennen.

Bei einem indirekten Verfahren (wie zum Beispiel bei einem indirekten Gießverfahren) wird die adaptive Fläche zunächst zum Erzeugen einer Transferfläche einer Transferschicht verwendet, die dann als Gießformfläche oder als Teil einer Gießformfläche beim Formen (zum Beispiel (Ab)Gießen) des Brillenglases eingesetzt wird. Anders ausgedrückt wird bei einem indirekten Verfahren (wie zum Beispiel einem indirekten Gießverfahren) die erzeugte adaptive Fläche indirekt zum Formen beziehungsweise Erzeugen der speziell für das Brillenglas bestimmten Gießformfläche oder zumindest eines Teils der speziell für das Brillenglas bestimmten Gießformfläche der ersten Gießform verwendet. Dies kann zum Beispiel durch das Bilden einer Transferfläche mit Hilfe der adaptiven Fläche erfolgen, wobei die Transferfläche anschließend zum Erzeugen der zumindest einen speziell für das Brillenglas bestimmten Gießformfläche verwendet wird. Die adaptive Fläche ist dabei im Wesentlichen ein Positiv der gewünschten Fläche des Brillenglases und die Transferfläche im Wesentlichen ein Negativ. Die Vorrichtung zum Herstellen eines Brillenglases kann dementsprechend eine Transferfläche einer Transferschicht umfassen, wobei die Transferfläche im Wesentlichen ein Negativ der adaptiven Fläche ist.

Die Transferfläche kann die speziell für das Brillenglas bestimmte Gießformfläche oder zumindest einen Teil der speziell für das Brillenglas bestimmten Gießformfläche bilden. In diesem Fall ist die Transferfläche Bestandteil der ersten Gießform.

Das Erzeugen der Transferschicht beziehungsweise der Transferfläche der Transferschicht kann beispielsweise durch Abgießen, Angießen, Prägen, Spritzgießen, Besprühen oder durch andere geeignete Verfahren erfolgen. Beispielsweise kann die Transferfläche ein (direkter oder indirekter) Abguss der adaptiven Fläche sein.

Das Verfahren zum Herstellen eines Brillenglases kann beispielsweise
Bereitstellen eines Gießformwerkzeugs (Gießformpakets) umfassend eine Gießform für eine Transferschicht (Transferschichtgießform) und eine zweite Gießform (Gegengießform), wobei die Transferschichtgießform und die zweite Gießform einen Hohlraum umschließen, und wobei die adaptive Fläche eine Gießformfläche oder einen Teil einer Gießformfläche der Transferschichtgießform bildet;
Auffüllen des Hohlraums des Gießformwerkzeugs mit einem aushärtbaren Material für die Transferschicht; und
Aushärten des aufgefüllten Materials der Transferschicht
umfassen.

Die ausgehärtete Transferschicht mit der mit Hilfe der adaptiven Fläche erzeugten Transferfläche kann, wie oben beschrieben, verwendet werden, um die für das Brillenglas bestimmte Gießform zu erzeugen oder zu bilden.

Sowohl dem direkten als auch dem indirekten Verfahren ist gemeinsam, dass die Flächenverformungsvorrichtung während des Aushärtens des Brillenglasmaterials von der ersten Gießform getrennt ist, wodurch die oben genannten Vorteile realisiert werden können. In beiden Fällen können, wie nachfolgend beschrieben, Verformungen, die zum Beispiel aufgrund des Schrumpfens des Brillenglasmaterials und/oder des Materials der Transferschicht während des Aushärtens auftreten, berücksichtigt werden.

Die indirekte Verwendung der adaptiven Fläche zum Erzeugen einer Gießformfläche für das herzustellende Brillenglas hat unter anderem den Vorteil, dass sich die Transferschicht schneller als das Brillenglas bilden lässt, z.B. durch die Auswahl einer geringeren Dicke und/oder eines schneller aushärtenden Materials der Transferschicht, durch die Verwendung von thermisch- oder UV-unterstützten Prozessen bei der Herstellung der Transferfläche, und/oder durch Verwendung von Thermoplasten. In diesem Fall lässt sich die Standzeit der aufwändigen (und damit teuren) adaptiven Fläche verringern, wodurch sich die Anzahl der mit der adaptiven Fläche pro Zeit erzeugbaren Brillengläser erhöhen und damit Kosten weiter senken lassen. Weiterhin verringert eine geringere Dicke den absoluten Gießschrumpf, wodurch die auf die adaptive Fläche wirkende Kraft wesentlich reduziert werden kann. Dies ermöglicht eine größere Formtreue und stellt geringere Anforderungen an die mechanische Stabilität der adaptiven Fläche und die Kraft und Stabilität der Flächenverformungsvorrichtung.

Bei allen oben beschriebenen Beispielen kann das Erzeugen der zumindest einen adaptiven Fläche ein Fixieren oder Stabilisieren der Form der adaptiven Fläche umfassen, wenn die vorbestimmte Form erreicht ist. Die Vorrichtung zum Herstellen eines Brillenglases kann eine entsprechende Fixiereinrichtung zum Fixieren oder Stabilisieren der Form der adaptiven Fläche umfassen.

Das Fixieren oder Stabilisieren der Form der adaptiven Fläche erleichtert das Lösen beziehungsweise Trennen der Flächenverformungsvorrichtung und insbesondere der Aktuatorvorrichtung von der adaptiven Fläche oder ersten Gießform. Dadurch kann die Standzeit zumindest eines Teils der Flächenverformungsvorrichtung und insbesondere der Aktuatorvorrichtung verkürzt werden.

Ferner ermöglicht das beschriebene Fixieren oder Stabilisieren der Form der adaptiven Fläche, dass hierdurch auf Abstands-, Fixier- und/oder Stabilisierungshalter in der Gießform, insbesondere im Raum hinter der adaptiven Fläche, in welchem das Material aushärtet, verzichtet werden kann. Solche Abstands-, Fixier- und/oder Stabilisierungshalter führen nachteilhafterweise zu Löchern bzw. Hohlräumen im Gießgut.

Das Fixieren oder Stabilisieren der adaptiven Fläche kann in unterschiedlicher Weise erfolgen.

In einem Beispiel kann die adaptive Fläche als eine Oberfläche einer verformbaren Membran ausgebildet sein, zum Beispiel einer Membran aus Kunststoff, aus dünnem Glas oder als dünnem Metall. Das Fixieren oder Stabilisieren der Form der adaptiven Fläche kann ein Fixieren oder Stabilisieren der Form der verformbaren Membran umfassen. Die Fixiereinrichtung kann entsprechend derart ausgebildet sein, die Form der Membran zu stabilisieren.

Das Fixieren oder Stabilisieren der Membran kann zum Beispiel mittels eines thermischen Prozesses (gegebenenfalls mit einer vorzuhaltenden Hysterese) erfolgen. Die Fixiereinrichtung kann entsprechend ausgebildet sein, die Form der Membran mittels eines thermischen Prozesses (gegebenenfalls mit einer vorzuhaltenden Hysterese) zu fixieren oder stabilisieren.

Zusätzlich oder alternativ kann die verformbare Membran, wie oben beschrieben, in Kontakt mit einer Mehrzahl von bewegbaren Stempeln stehen. Das Fixieren oder Stabilisieren der Form der adaptiven Fläche kann ein Arretieren der Stempel umfassen. Entsprechend kann die Fixiereinrichtung derart ausgebildet sein, die Stempel zu arretieren. Nach dem Ausformen der Membran hält diese die Form (gegebenenfalls mit einer vorzuhaltenden Hysterese) auch ohne die Flächenverformungsvorrichtung und insbesondere ohne die Aktuatorvorrichtung, wodurch letztere nach dem Ausformen der Form der Membran von der Membran entfernt werden kann. Nach der Trennung ist die Flächenverformungsvorrichtung bereit, die nächste adaptive Fläche auszurichten, während die zuvor ausgerichtete adaptive Fläche zur Herstellung eines Brillenglases (zum Beispiel mittels des zuvor beschriebenen direkten oder indirekten Gießverfahrens) verwendet werden kann. Dadurch kann die Standzeit der Flächenverformungsvorrichtung erheblich verkürzt werden, da diese so nicht für die gesamte Abgießzeit gebraucht wird.

Die Stempel können gleichzeitig oder nacheinander arretiert werden. Nach dem Arretieren der Stempel kann die adaptive Fläche von der Aktuatorvorrichtung (welche die Stempel bewegt) und gegebenenfalls von der Steuerungsvorrichtung und/oder der Sensorvorrichtung getrennt werden. Die Aktuatorvorrichtung kann entsprechend lösbar/trennbar an den bewegbaren Stempeln gekoppelt sein.

Zusätzlich oder alternativ können zwei oder mehr Elemente, wie z.B. die Stempel oder Stifte, der Flächenverformungsvorrichtung bzw. Aktuatorvorrichtung derart miteinander verriegelt bzw. fixiert werden, dass eine Relativbewegung zwischen den Elementen verhindert wird. Dadurch kann vorteilhafterweise eine verbesserte Formstabilität gewährleistet werden.

Die Form der adaptiven Fläche kann so bestimmt werden, dass die mit Hilfe der adaptiven Fläche hergestellte Fläche (wie zum Beispiel eine Transferfläche oder eine Brillenglasfläche) eine bestimmte beziehungsweise gewünschte Form aufweist (zum Beispiel eine sphärische, asphärische, torische, atorische, progressive, etc. Form).

Beispielsweise kann die mit Hilfe der adaptiven Fläche hergestellte Brillenglasfläche eine gewünschte optische Wirkung und gegebenenfalls eine bestimmte räumliche Verteilung oder Änderung der optischen Wirkung aufweisen. Die optische Wirkung kann einen Brechwert, einen Astigmatismus, ein Prisma, Fehler höherer Ordnung, etc. umfassen. Die optische Wirkung und deren räumlichen Verteilung oder Änderung können mittels bekannter Verfahren (wie zum Beispiel Optimierungsverfahren) anhand der Rezeptdaten (Sphäre, Zylinder, Achse und/oder Prisma) und gegebenenfalls weiterer Daten (wie zum Beispiel individueller Daten des Benutzers des Brillenglases) bestimmt werden.

Es ist nicht erforderlich, die gesamte adaptive Fläche abzuändern, um eine gewünschte Form zu erhalten. So ist es möglich, einen Teil der adaptiven Fläche abzuändern, um zum Beispiel einen vorgegebenen Wirkungsverlauf der mit Hilfe der adaptiven Fläche herzustellenden Fläche des Brillenglases zu erzielen. Ein anderer Teil (wie zum Beispiel einen Randbereich) kann unverändert bleiben. Eine Änderung der Form der adaptiven Fläche beinhaltet folglich eine Änderung der Form zumindest eines Teils der adaptiven Fläche.

Das Bestimmen der Form der adaptiven Fläche kann folglich
Bestimmen einer Grundform für die zumindest eine adaptive Fläche; und
Abändern zumindest eines Teils der Grundform in Abhängigkeit von den Daten der zu erzeugenden Oberfläche des herzustellenden Brillenglases umfassen.

Die Flächenbestimmungsvorrichtung kann ferner:
eine Grundformbestimmungseinrichtung zum Bestimmen einer Grundform für die zumindest eine adaptive Fläche; und
eine Grundformänderungseinrichtung zum Abändern zumindest eines Teils der Grundform in Abhängigkeit von den Daten der zu erzeugenden Oberfläche des herzustellenden Brillenglases
umfassen.

Der Begriff "Bestimmen" einer Grundform im Sinne der vorliegenden Anmeldung beinhaltet "Festlegen", "Ermitteln", "Berechnen", "Abschätzen", "Auswählen", etc. einer Grundform.

Insbesondere kann das Bestimmen einer Grundform eine Auswahl einer Grundform für die zumindest eine adaptive Fläche aus einer Mehrzahl von Grundformen anhand der Rezeptdaten des herzustellenden Brillenglases umfassen. Dabei kann die Auswahl ähnlich der Auswahl eines Halbfabrikats nach einem Basiskurvensystem erfolgen.

Die Grundform der adaptiven Fläche kann der Form in einem Grundzustand ohne Veränderung bzw. Verformung der adaptiven Fläche entsprechen. Im Fall einer aus mehreren Flächenelemente zusammengesetzte adaptive Fläche entspricht die Grundform der Position und Orientierung der Flächenelemente ohne Auslenkung und/oder Verformung der einzelnen Flächenelemente. Die Grundform kann dabei der groben Form der zu erzeugenden Fläche entsprechen.

Die Grundform der adaptiven Fläche (wie z.B. durch die Position der Flächenelemente ohne einer Auslenkung und/oder Verformung vorgegeben) kann dabei der groben beziehungsweise globalen Form der zu erzeugenden Fläche (zum Beispiel der zu erzeugenden Brillenglasfläche oder der zu erzeugenden Transferfläche) entsprechen. Die Grundform kann z.B. eine sphärische, asphärische, zylindrische, torische, atorische oder progressive Form sein: Wenn die Grundform der adaptiven Fläche beziehungsweise der Elemente der Flächenverformungsvorrichtung der groben/globalen Form der zu erzeugenden Fläche folgt beziehungsweise folgen, sind geringere Auslenkungen der adaptiven Fläche beziehungsweise der Elemente der Flächenverformungsvorrichtung notwendig. Dadurch können auch größere Brillenglasflächen und/oder stärkere Krümmungen mit geringem Hub der Aktorik beziehungsweise der Aktuatorvorrichtung der Flächenverformungsvorrichtung erzeugt werden. Für ein Brillenglasportfolio oder eine Brillenglasserie können analog einem Basiskurvensystem bei konventioneller Fertigung adaptive Flächen mit unterschiedlichen Grundformen (wie z.B. globale sphärische, asphärische, torische, atorische Formen) sowie gegebenenfalls Additionen (Nahbereich und Progressionskanal) vorgehalten werden. Die Individualisierung des Glases bzw. die Erzeugung der genauen Wirkung kann dann innerhalb der von der Grundform und des Hubs der adaptiven Fläche möglichen Rahmen über die Adaption beziehungsweise die Verformung der adaptiven Fläche erfolgen.

Zur Einstellung der adaptiven Fläche kann die direkte räumliche beziehungsweise geometrische Position der einzelnen Aktuatoren der Aktuatorvorrichtung über Positionsgeber erfasst und an das gewünschte Pfeilhöhenprofil des herzustellenden Brillenglases angepasst werden. Alternativ oder zusätzlich können die Aktuatorpositionen indirekt über ein Analysieren der adaptiven Fläche mittels geeigneter Sensoren (um Beispiel Wellenfronsensoren) justiert werden. Wenn die die adaptive Fläche eine reflektierende Fläche ist, kann auf bekannte Regelungsverfahren, wie zum Beispiel von adaptiven Spiegeln, zurückgegriffen werden. Die indirekte Methode zur Messung der Aktuatorpositionen kann dabei insbesondere die Steifigkeit der adaptiven Fläche (wie zum Beispiel die Steifigkeit der verformbaren Membran) berücksichtigen.

Während des Aushärtens des Materials in einem Gießformwerkzeug kann das Gießmaterial (zum Beispiel das Brillenglasmaterial oder das Material der Transferschicht) schrumpfen (sog. Gießschrumpf). Der mit dem Aushärten verbundene Gießschrumpf beziehungsweise die Volumenverringerung des Gießmaterials kann Verformungen mit sich bringen, die Auswirkungen auf die zu erzeugende Fläche haben können. Daraus resultierende Abweichungen der tatsächlichen Flächen von Soll-Flächen können durch ein Kompensieren des während des Aushärtens des Gießmaterials auftretenden Gießschrumpfs des Gießmaterials begegnet werden.

Das Verfahren kann dementsprechend ferner ein Kompensieren eines während des Aushärtens des Brillenglasmaterials auftretenden Gießschrumpfs umfassen. Bei einem indirekten Verfahren, bei dem zunächst eine Transferschicht (zum Beispiel mittels (Ab)Gießens) erzeugt wird, kann alternativ oder zusätzlich ein während des Aushärtens des Materials der Transferschicht auftretender Gießschrumpf kompensiert werden.

Ferner kann die Vorrichtung zum Herstellen eines Brillenglases eine Kompensationsvorrichtung zum Kompensieren eines während des Aushärtens des Brillenglasmaterials und/oder eines währen des Aushärtens des Materials der Transferschicht auftretenden Gießschrumpfs umfassen.

Das Kompensieren des Gießschrumpfs beziehungsweise der Volumenminderung des Gießmaterials (zum Beispiel des Brillenglasmaterials und/oder des Materials der Transferschicht) kann in unterschiedlicher Weise erfolgen.

Das Kompensieren des Gießschrumpfs beziehungsweise der Volumenminderung des Gießmaterials (zum Beispiel des Brillenglasmaterials und/oder des Materials der Transferschicht) kann zum Beispiel ein Bestimmen eines zu erwartenden Gießschrumpfs des Gießmaterials während des Aushärtens und ein Vorhalten (Vorkompensieren oder Einkalkulieren) des zu erwartenden Gießschrumpfs beim Bestimmen der Form der adaptiven Fläche umfassen.

Die Kompensationsvorrichtung kann entsprechend derart ausgebildet sein, einen zu erwartenden Gießschrumpf des Gießmaterials während des Aushärtens des Gießmaterials zu bestimmen und den zu erwartenden Gießschrumpf beim Bestimmen der Form der adaptiven Fläche zu berücksichtigen (vorzuhalten oder vorzukompensieren).

Ein Vorkompensieren eines zu erwartenden Gießschrumpfs während des Aushärtens des Gießmaterials kann insbesondere dann von Vorteil sein, wenn im entsprechenden Gießpaket die Verbindung zwischen den beiden Gießformen und/oder die Gießformen selbst sehr starr ausgeführt sind und kaum Verformungen aufnehmen. Ein Vorkompensieren einer zu erwartenden Volumenminderung des Gießmaterials während des Aushärtens kann (insbesondere bei Gießprodukten mit lokal stark unterschiedlichen Dicken) nur lokal erfolgen.

Es ist ferner möglich, flexible Gießwerkzeuge beziehungsweise Gießpakete zu verwenden, bei denen die Verbindung zwischen den beiden Gießformen und/oder eine der Gießformen flexibel ausgeführt ist.

Bei einer Verwendung eines Gießwerkzeugs mit einer flexiblen Verbindung zwischen den beiden Gießformen führt der Gießschrumpf hauptsächlich zu einer Verringerung der Dicke des Gießprodukts (zum Beispiel des Brillenglases oder der Transferschicht). Die Einflüsse auf die Flächenform lassen sich damit deutlich verringern. Die daraus resultierende Dickenänderung kann vorkompensiert (d.h. einkalkuliert und vorgehalten) werden. Da sich die Oberflächen des Gießprodukts weniger stark verformen kann gegebenenfalls auf eine Anpassung oder Korrektur der Form (wie zum Beispiel der Form der adaptiven Fläche) verzichtet werden.

Insbesondere kann das Verfahren zum Herstellen eines Brillenglases Bereitstellen eines Gießformwerkzeugs umfassen. Das bereitgestellte Gießformwerkzeug kann i) die erste Gießform (d.h. die für das Brillenglas bestimmte Gießform) oder (bei einem indirekten Verfahren) eine Gießform für eine Transferschicht und ii) eine zweite Gießform (auch Gegengießform genannt) mit einer zweiten Gießformfläche umfassen. Wie oben beschrieben wird die Transferschicht anschließend verwendet, um eine Gießformfläche (die erste Gießformfläche) der Gießform für das herzustellende Brillenglas (der ersten Gießform) zu erzeugen oder zu bilden.

Das bereitgestellte Gießformwerkzeug kann derart ausgebildet sein, dass der Abstand zwischen i) der ersten Gießform oder der Gießform für die Transferschicht und ii) der zweiten Gießform entsprechend dem Gießschrumpf beziehungsweise der Volumenminderung des Gießmaterials während des Aushärtens des Gießmaterials reduzierbar ist. Das Kompensieren des Gießschrumpfs beziehungsweise der Volumenminderung des Gießmaterials kann ein Vorhalten (Vorkompensieren oder Einkalkulieren) einer aus der Reduktion des Abstands zwischen den Gießformen resultierenden Dickenreduktion des Gießprodukts beim Bestimmen der Form der adaptiven Fläche umfassen. Wie oben beschrieben kann in diesem Fall von einer Anpassung oder Korrektur der Form (wie zum Beispiel der Form der adaptiven Fläche) verzichtet werden.

Ebenfalls ist es möglich, eine Gegengießform (d.h. eine Gießform, welche der ersten Gießform oder der Gießform für die Transferschicht gegenübersteht) des bereitgestellten Gießformwerkzeugs verformbar beziehungsweise flexibel auszuführen, so dass sich hauptsächlich diese entsprechend dem Gießschrumpf verformt. Beispielsweise kann eine Gegengießform mit einer sphärischen Form aus speziellem Glas verwendet werden, bei der durch den Gießschrumpf primär der globale Radius geändert wird. Die daraus resultierende Formänderung kann vorkompensiert werden. Ein beispielhaftes Glas ist Kronglas (zum Beispiel von Barberini). Durch seine Steifigkeit kann dieses Glas verhindern, dass lokalen Änderungen nachgegeben wird.

Die Vorrichtung zum Herstellen eines Brillenglases kann ferner ein Gießformwerkzeug umfassen, wobei das Gießformwerkzeug i) die erste Gießform oder eine Gießform für eine Transferschicht und ii) eine zweite Gießform mit einer zweiten Gießformfläche umfasst,
wobei das Gießformwerkzeug derart ausgebildet ist, dass der Abstand zwischen i) der ersten Gießform oder der Gießform für die Transferschicht und ii) der zweiten Gießform entsprechend dem Gießschrumpf reduzierbar ist, und wobei die Kompensationsvorrichtung derart ausgebildet ist, eine aus der Reduktion des Abstands zwischen den Gießformen resultierende Dickenreduktion des Gießprodukts beim Bestimmen der Form der adaptiven Fläche zu berücksichtigen; und/oder
wobei die Form der zweiten Gießformfläche entsprechend dem Gießschrumpf veränderbar ist, und wobei die Kompensationsvorrichtung derart ausgebildet ist, die Formveränderung der Gießformfläche der zweiten Gießform beim Bestimmen der Form der adaptiven Fläche zu berücksichtigen.

Weiterhin können auch zwei oder alle drei der oben beschriebenen Lösungen zum Kompensieren des Gießschrumpfs kombiniert werden. Insbesondere bei Gießprodukten mit lokal stark unterschiedlichen Dicken kann es sinnvoll sein, die Hauptlast mit einem der oben beschriebenen flexiblen Gießwerkzeuge und dem entsprechenden Kompensationsverfahren abzufangen und an Stellen hoher lokaler Dicken (großes lokales Volumen) dort lokal zusätzliche Veränderungen gemäß dem Kompensationsverfahren mit Vorhalten eines zu erwartenden Gießschrumpfs vorzukompensieren.

Die für die Vorkompensation notwendigen Werte (Dicken und/oder Flächenkorrekturen) können in unterschiedlicher Weise ermittelt werden, wie zum Beispiel mittels analytischer Berechnung, mathematischer Modellierung, experimentell mit oder ohne maschinelles Lernen, etc. Ein oder mehrere dieser Ansätze können ferner kombiniert werden.

Jede der in der vorliegenden Anmeldung beschriebenen Techniken zum Formen einer Gießformfläche unter Verwendung einer adaptiven Fläche (nachfolgend kurz Transfertechniken genannt) kann entweder für eine oder für beide Flächen eines Brillenglases verwendet werden. Es können auch für beide Flächen jeweils unterschiedliche Transfertechniken eingesetzt werden. Weiterhin kann auch nur für eine Fläche eine der beschriebenen Transfertechniken und für die andere eine konventionelle Gießform eingesetzt werden. Beispielhafte Kombinationen sind:
Sphärische Vorderfläche und Transfertechnik für die Rückfläche (gegebenenfalls mit Basiskurven);
Asphärische Vorderfläche und Transfertechnik für die Rückfläche (gegebenenfalls mit Basiskurven);
Torische bzw. atorische Vorderfläche und Transfertechnik für die Rückfläche (gegebenenfalls mit Basiskurven);
Progressive Vorderfläche und Transfertechnik für die Rückfläche (dabei kann die Vorderfläche die vollständige oder nur einen Teil der progressiven Wirkung des Glases ausmachen);
Die obigen Beispiele, wobei die Rollen von Vorder- und Rückfläche vertauscht sind.

Der Begriff "Transfertechniken" bezieht sich dabei allgemein sowohl auf direkte als auch auf indirekte Techniken zum Formen einer Gießformfläche unter Verwendung einer adaptiven Fläche.

Das Festlegen der Geometrie der Vorder- und Rückflächen kann dabei nach den bekannten Verfahren erfolgen.

Die oben genannten Steuerungsvorrichtungen und Vorrichtungen zum Bereitstellen, Bestimmen, Berechnen oder Erfassen von Daten (wie zum Beispiel Daten einer herzustellenden Brillenglasfläche, Rezeptdaten, Daten der Form der adaptiven Fläche, Korrekturdaten, etc.) können durch geeignet konfigurierte bzw. programmierte Datenverarbeitungsvorrichtungen (insbesondere spezialisierte Hardwaremodule, Computer oder Computersysteme, wie zum Beispiel Rechner- oder Datenwolken (Clouds)) mit entsprechenden Recheneinheiten, elektronische Schnittstellen, Speicher und Datenübermittlungseinheiten realisiert werden. Die Vorrichtungen können ferner zumindest eine vorzugsweise interaktive grafische Benutzerschnittstelle (GUI) umfassen, welche es einem Benutzer ermöglicht, Daten zu betrachten und/oder einzugeben und/oder zu modifizieren.

Die oben genannten Vorrichtungen können ferner geeignete Schnittstellen aufweisen, die eine Übermittlung, Eingabe und/oder Auslesen von Daten (wie zum Beispiel Daten einer zu erzeugenden Brillenglasfläche, Rezeptdaten, Daten der Form der adaptiven Fläche, Korrekturdaten, etc.) ermöglichen. Ebenfalls können die Vorrichtungen zumindest eine Speichereinheit umfassen, zum Beispiel in Form einer Datenbank, welche die verwendeten Daten speichert.

Nachfolgend werden bevorzugte Ausführungsformen der vorliegenden Erfindung beispielhaft beschrieben. Es zeigt:
**Figur 1** ein Flussdiagramm eines beispielhaften Verfahrens zum Herstellen eines Brillenglases mittels eines direkten Abgusses;
**Figur 2** ein Flussdiagramm eines ersten beispielhaften Verfahrens zum Herstellen eines Brillenglases mittels eines indirekten Abgusses;
**Figur 3** ein Flussdiagramm eines zweiten beispielhaften Verfahrens zum Herstellen eines Brillenglases mittels eines indirekten Abgusses;
**Figur 4** eine schematische Darstellung einer ersten beispielhaften adaptiven Fläche und einer entsprechenden Flächenverformungsvorrichtung, welche zum Herstellen eines Brillenglases verwendet werden können;
**Figur 5** eine schematische Darstellung einer zweiten beispielhaften adaptiven Fläche und einer entsprechenden Flächenverformungsvorrichtung, welche zum Herstellen eines Brillenglases verwendet werden können.

Im Folgenden werden einige beispielhafte Transfertechniken beziehungsweise beispielhafte Verfahren und Vorrichtungen zum Herstellen eines Brillenglases beschrieben. Der Einsatz adaptiver Flächen ist jedoch nicht auf diese Verfahren und Vorrichtungen beschränkt.

### Direkter Abguss

Wie oben beschrieben wird beim direkten Abguss die adaptive Fläche direkt als Gießformfläche oder als ein Teil der Gießformfläche beim Abgießen des Brillenglases verwendet. Die adaptive Fläche ist dabei ein Negativ der gewünschten Fläche des Brillenglases. Die adaptive Fläche stellt in diesem Fall zumindest einen Teil einer speziell für das Brillenglas bestimmten Gießformfläche einer Gießform (der ersten Gießform) dar.

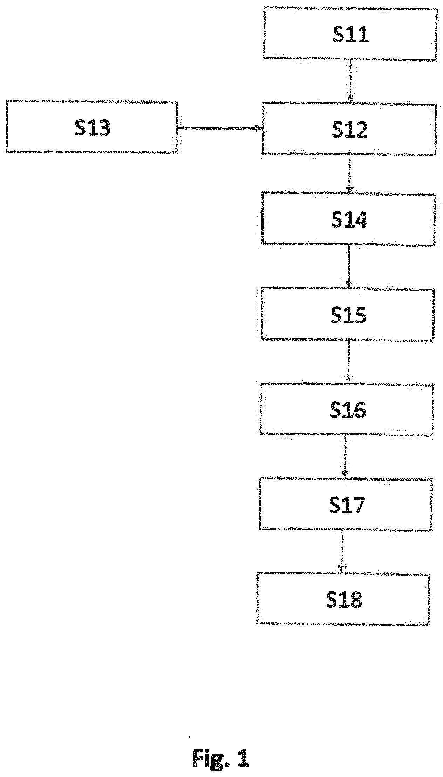

**Fig. 1** zeigt ein beispielhaftes Verfahren zum Herstellen eines Brillenglases mit Hilfe eines direkten Abgusses.

In einem ersten Schritt S11 werden Daten einer zu erzeugenden Fläche des herzustellenden Brillenglases erfasst. Die Daten können beliebige Daten sein, die die zu erzeugende Fläche des Brillenglases beschreiben oder anhand derer die zu erzeugende Fläche generiert werden kann. Die Form der adaptiven Fläche wird anhand der Daten der zu erzeugenden Oberfläche und gegebenenfalls weiterer Korrekturwerte berechnet und mittels einer Flächenverformungsvorrichtung eingestellt (Schritt S12). Dabei kann wie oben beschrieben ein eventuell auftretender Gießschrumpf vorkompensiert werden (Schritt S13). Die erste Gießform mit der eingestellten adaptiven Fläche kann mit einer zweiten Gießform (Gegengießform) in einem Gießformwerkzeug (Gießpaket) kombiniert beziehungsweise zusammengesetzt werden (Schritt S14). Die adaptive Fläche und die Innenfläche der Gegengießform umschließen dabei einen Hohlraum, welcher mit einem aushärtbaren Brillenglasmaterial befüllt wird (Schritt S16). Nach dem Befüllen härtet das Brillenglasmaterial im Gießformwerkzeug aus (Schritt S17). Dabei ist die zur Verformung der adaptiven Fläche eingesetzte Flächenverformungsvorrichtung während des Aushärtens des Brillenglasmaterials von der ersten Gießform und somit auch von der adaptiven Fläche kraftschlüssig und/oder räumlich getrennt und kann beispielsweise zum Formen anderer adaptiver Flächen eingesetzt werden. Um dies zu ermöglichen, kann die Flächenverformungsvorrichtung und insbesondere die Aktuatorvorrichtung der Flächenverformungsvorrichtung trennbar/lösbar an der adaptiven Fläche gekoppelt sein.

In einem Beispiel kann die Flächenverformungsvorrichtung bereits vor dem Auffüllen des Gießwerkzeugs von der ersten Gießform getrennt werden (Schritt S15). Ebenfalls ist es möglich, bereits vor dem Zusammensetzen des Gießformwerkzeugs aus der ersten Gießform und der Gegengießform, die Flächenverformungsvorrichtung von der ersten Gießform zu trennen.

Nach dem Aushärten wird das Brillenglas von dem Gießformwerkzeug beziehungsweise von der ersten Gießform und der Gegengießform getrennt (Schritt S18).

### Indirekter Abguss

Beim indirekten Abguss wird die adaptive Fläche zum Erzeugen einer Transferfläche einer Transferschicht verwendet, die dann als Gießformfläche oder als Teil einer Gießformfläche beim Abgießen des Brillenglases eingesetzt wird. Die adaptive Fläche ist dabei im Wesentlichen ein Positiv der gewünschten Fläche des Brillenglases und die Transferfläche im Wesentlichen ein Negativ. Dieses Vorgehen hat unter anderem den Vorteil, dass sich die Transferschicht schneller als das Brillenglas bilden lässt, da das Material, Dicke, etc. der Transferschicht nicht die gleichen hohen Anforderungen, die an ein Brillenglas gestellt werden, erfüllen muss. Beispielsweise kann für die Transferschicht eine geringe Dicke und/oder ein schnell aushärtendes Material verwendet werden. Des Weiteren kann das Aushärten der Transferschicht durch den Einsatz von thermisch- oder UV-unterstützten Prozessen und/oder die Verwendung von Thermoplasten, etc. beschleunigt werden. Dadurch kann die Standzeit der aufwändigen (und damit teuren) adaptiven Fläche verringert werden, wodurch sich die Anzahl der mit der adaptiven Fläche pro Zeit erzeugbaren Brillengläser erhöhen und damit Kosten senken lassen.

Das Erzeugen der Transferschicht kann dabei beispielsweise durch Abgießen, Prägen, Spritzgießen, Besprühen und andere geeignete Verfahren erfolgen. Die Transferschicht kann entweder alleine als Gießform eingesetzt werden, auf einem bei der Erzeugung der Transferfläche verwendetem Trägersubstrat verbleiben oder nach der Erzeugung auf ein anderes Trägersubstrat aufgetragen werden. Die zweite und dritte Möglichkeit haben den Vorteil, dass die Dicke der Transferschicht verringert werden kann, da das Trägersubstrat beispielsweise mechanische Belastungen, die beim Gießen des Brillenglases und/oder beim Erstellen des Gießpakets auftreten, gut aufnehmen kann. Dadurch lässt sich der Materialeinsatz und die Standzeit der adaptiven Fläche für die Erzeugung der Transferschicht verringern. Mit anderen Worten ist das Volumen des Materials, das aushärtet, im Gegensatz zur Herstellung einer kompletten Gießform deutlich geringer, wodurch die Kräfte durch Gießschrumpf erheblich reduziert werden können. Die Dicke der Transferschicht kann weiterhin reduziert werden, indem die der Transferschicht zugewandte Fläche des Trägersubstrats dem groben Verlauf der gewünschten Flächenform entspricht (zum Beispiel sphärisch, torisch, gegebenenfalls Ausformung für Addition). Der Gießschrumpf und die damit verbundenen-Kräfte werden dadurch nicht nur geringer, sondern auch gleichmäßiger.

Nachfolgend sind beispielhafte Verfahren zum Herstellen eines Brillenglases unter Verwendung eines indirekten Gießverfahrens:

### Beispielhaftes Verfahren mit Trägersubstrat und Angießen der Transferschicht

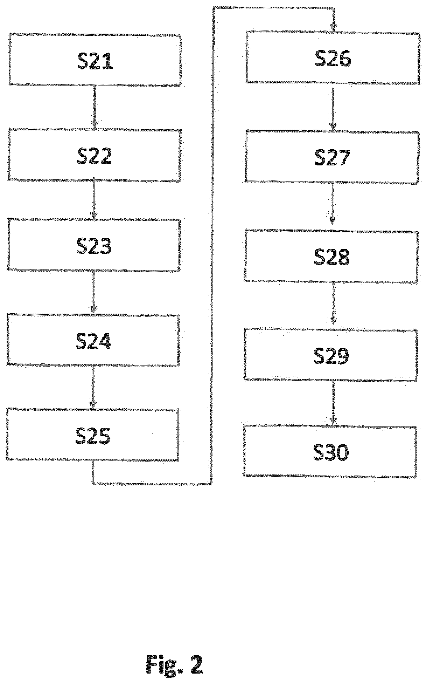

**Figur 2** zeigt ein Flussdiagramm eines ersten beispielhaften Verfahrens zum Herstellen eines Brillenglases mittels eines indirekten Abgusses. Das Verfahren umfasst die folgenden Schritte:
1. Es wird ein erstes Gießpaket aus der adaptiven Fläche und einem Trägersubstrat gebildet (Schritt S21).
   Vorzugsweise weisen beide Innenflächen des Gießpakets den gleichen oder einen ähnlichen groben Verlauf auf, der grob der gewünschten Flächenform entspricht (zum Beispiel sphärisch, torisch, gegebenenfalls Ausformung für Addition)
2. Die adaptive Fläche wird mit Hilfe einer Flächenverformungsvorrichtung auf die gewünschte Form gebracht (Schritt S22).
3. Das Ausgangsmaterial der Transferschicht wird in das erste Gießpaket eingefüllt (Schritt S23).
4. Die Transferschicht wird ausgehärtet (Schritt S24).
   Dies kann beispielsweise thermisch und/oder UV-unterstützt erfolgen.
5. Transferschicht und Trägersubstrat werden gemeinsam von der adaptiven Fläche getrennt, wobei die Transferschicht auf dem Trägersubstrat verbleibt (Schritt S25).
6. Aus dem Verbund aus Transferschicht und Trägersubstrat und einer Gegengießform wird ein zweites Gießpaket gebildet. Dabei weist die Transferschicht in das Innere des Gießpakets. Der Verbund aus Transferschicht und Trägersubstrat bildet somit eine erste Gießform (Schritt S26).
7. Das Ausgangsmaterial des Brillenglases wird in das zweite Gießpaket eingefüllt (Schritt S27).
8. Das Brillenglas wird ausgehärtet (Schritt S28).
   Dies kann beispielsweise thermisch und/oder UV-unterstützt erfolgen.
9. Das Brillenglas und die Transferschicht werden getrennt (Schritt S29).
   a) Dabei kann die Transferschicht auf dem Trägersubstrat verbleiben. Eine gute Haftung zwischen Transferschicht und Trägersubstrat kann das Ablösen der Transferschicht von dem Brillenglas erleichtern.
   b) Alternativ kann auch Trägersubstrat von der Transferschicht gelöst werden, wobei die Transferschicht zumindest teilweise auf dem Brillenglas verbleibt. Anschließend können durch thermische, chemische oder mechanische Methoden die Transferschicht bzw. die Reste der Transferschicht vom Brillenglas entfernt werden.
      Beim Prozess des Trennens des Brillenglases und der Transferschicht können sowohl die Transferschicht als auch das Trägersubstrat zerstört werden.
10. Das Brillenglas und die Gegengießform werden getrennt (Schritt S30). Dabei kann die Gegengießform zerstört werden.

Die Reihenfolge der Schritte 1-3 (S21 - S23) und 9-10 (S29 - S30) können jeweils beliebig variiert werden.

Die Haftung der einzelnen Komponenten aneinander kann durch Zugabe von Additiven gesteuert werden. Höhere Konzentrationen von Additiven bewirken dabei meist ein schwächeres Haften an den angrenzenden Schichten.

Weiterhin kann anstelle der Schritte 1 (S21) und 3 (S23) das Ausgangsmaterial der Transferschicht auch vor dem Prozess mit Hilfe eines anderen Verfahrens (z.B. Spin-Coating, Sprühen, etc.) auf das Transfersubstrat aufgebracht werden.

### Materialbeispiel: Trägersubstrat: Perfalit 1.5, Transferschicht: Transhade (ohne Farbstoffe), Gegengießform: Kronglas, Brillenglas: Perfalit 1.67

### Beispielhaftes Verfahren ohne Trägersubstrat und mit Prägen der Transferschicht

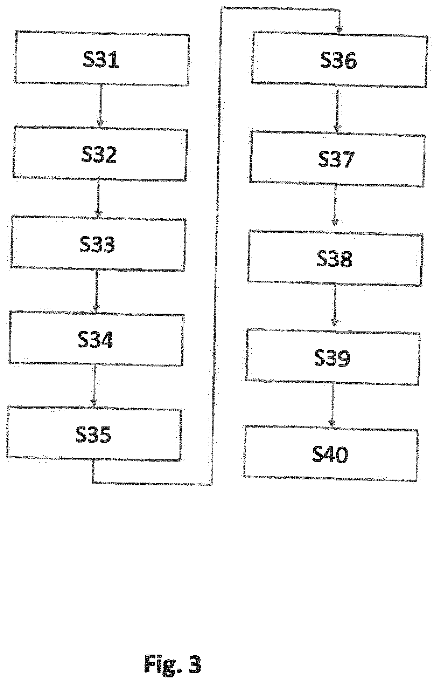

**Figur 3** zeigt ein Flussdiagramm eines zweiten beispielhaften Verfahrens zum Herstellen eines Brillenglases mittels eines indirekten Abgusses. Das Verfahren umfasst die folgenden Schritte:
1. Eine adaptive Form mit einer adaptiven Fläche wird an ein Transfersubstrat gebracht (Schritt S31).
   Vorzugsweise weist die zur adaptiven Form ausgerichtete Fläche des Transfersubstrats bereits einen der gewünschten Flächenform ähnlichen Verlauf (zum Beispiel sphärisch, torisch, gegebenenfalls Ausformung für Addition) auf.
2. Die gewünschte Form wird mithilfe der adaptiven Form in das Transfersubstrat eingeprägt (Schritt S32).
   Dies kann z.B. bei Thermoplasten dadurch geschehen, dass zumindest die zur adaptiven Form ausgerichtete. Fläche der Transferschicht aufgeschmolzen wird. Dieses Aufschmelzen kann bereits vor Schritt 1 geschehen.
3. Das Transfersubstrat wird ausgehärtet (Schritt S33).
   Dies kann beispielsweise durch Abkühlen erfolgen.
4. Das Transfersubstrat wird von der adaptiven Fläche getrennt (Schritt S34).
5. Aus dem Transfersubstrat und einer Gegengießform wird ein Gießpaket gebildet. Dabei weist die geprägte Seite der Transferschicht in das Innere des Gießpaketes (Schritt S35).
6. Das Ausgangsmaterial des Brillenglases wird in das Gießpaket eingefüllt (Schritt S36).
7. Das Brillenglas wird ausgehärtet (Schritt S37).
   Dies kann thermisch und/oder UV-unterstützt erfolgen.
8. Das Brillenglas und das Transfersubstrat werden getrennt (Schritt S38).
   Dabei kann das Transfersubstrat zerstört werden. Das Trennen kann wie im Schritt 9 des Verfahrens mit Trägersubstrat und Angießen der Transferschicht erfolgen (Schritt S39).
9. Das Brillenglas und die Gegengießform werden getrennt (Schritt S40).
   Dabei kann die Gegengießform zerstört werden.

Die Reihenfolge der Schritte 8 (S38) und 9 (S40) kann beliebig variiert werden.

### Materialbeispiel: Transfersubstrat: PMMA, Gegengießform: Kronglas, Brillenglas: Perfalit 1.67

### Trennen und Haftung

Für viele Ausführungsformen kann es wichtig sein, dass beim Ablösen von Transferschichten, Brillengläsern, Gegengießformen und/oder Trägersubstraten die jeweils richtigen Komponenten voneinander gelöst werden oder aneinander haften bleiben. Dies kann beispielsweise durch Zugabe von Additiven gesteuert werden. Höhere Konzentrationen von Additiven bewirken dabei meist ein schwächeres Haften an den angrenzenden Schichten. Weiterhin können sogenannte Trennschichten oder Haftvermittler zwischen den Schichten eingeführt werden.

Beispielsweise kann das Haftungsverhältnis derart gesteuert werden, dass bei einem indirekten Abguss die Transferschicht sowohl an der adaptiven Fläche als auch am Brillenglas schwächer haftet als an einem Trägersubstrat. In einem anderen Beispiel kann das Haftungsverhältnis so gewählt werden, dass die Transferschicht zwar an der adaptiven Fläche schwächer haftet als an dem Trägersubstrat, aber gleichgut oder sogar stärker an dem Brillenglas als an dem Trägersubstrat. Insbesondere in diesem Fall kann die Transferschicht auch zumindest teilweise auf dem Brillenglas verbleiben, zum Beispiel als Träger der Photochromie oder als Harlack.

### Adaptive Fläche und Flächenverformungsvorrichtung

Wie oben beschrieben, können die adaptive Fläche und die Flächenverformungsvorrichtung unterschiedlich realisiert werden.

Die adaptive Fläche und die Flächenverformungsvorrichtung können zum Beispiel als Kombination aus einer Aktorik beziehungsweise Aktuatorvorrichtung (als Bestandteil einer Flächenverformungsvorrichtung) und einer verformbaren Membran realisiert werden. Nach dem Ausformen der Membran hält die Membran (gegebenenfalls mit Hilfe einer Fixiervorrichtung) vorzugsweise die Form (gegebenenfalls mit einer vorzuhaltenden Hysterese) auch ohne die Aktorik, wodurch letztere nach dem Ausformen der Form der Membran von der Membran entfernt werden kann. Dadurch kann die Standzeit der Aktorik verkürzt werden, da diese nicht für die gesamte oder teilweise (Ab)Gießzeit gebraucht wird.

Nachfolgend sind einige beispielhafte Realisierungen der adaptiven Fläche und die Flächenverformungsvorrichtung:
Beispiel 1: Piezoelemente als Aktuatoren, eine Kunststofffläche als Membran. Die Form der Kunststofffläche kann zum Beispiel durch thermische Prozesse stabilisiert und die Piezoelemente abgezogen werden;
Beispiel 2: Ein beweglicher Linearmotor und von diesem nacheinander bewegte Stempel (zum Beispiel in Form von Stiften) in einer Matrix und eine Metallfläche als Membran. Die Form der Metallfläche kann durch eine Arretierung (zum Beispiel durch die zwischen Stiften und Matrix auftretende Reibung, durch einen speziellen Arretiermechanismus und/oder oder ein Verscheren der Matrix) gehalten werden. Der Linearmotor stellt die einzelnen Stifte nacheinander ein und wird nach dem letzten Stift abgezogen;
Beispiel 3: Motoren mit Mikrometerschrauben und eine dünne Glasfläche als Membran. Die Mikrometerschrauben werden von dem jeweiligen Motor eingestellt und die Motoren nach der Einstellung der Mikrometerschrauben entfernt.

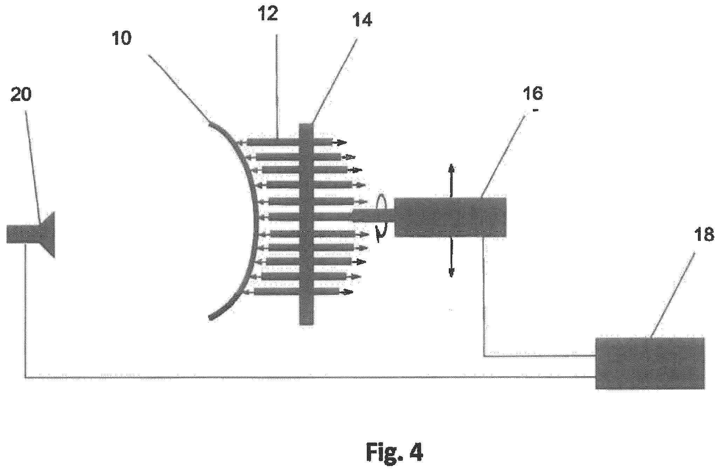

**Figur 4** zeigt eine schematische Darstellung einer ersten beispielhaften adaptiven Fläche 10 (zum Beispiel in Form einer Membran) und einer entsprechenden Flächenverformungsvorrichtung. Die Form der adaptiven Fläche 10 wird, wie oben beschrieben, mit Hilfe von beweglichen Stempeln 12 (zum Beispiel Mikrometerschrauben) eingestellt. Nach der Einstellung der Form der adaptiven Fläche 10 wird diese verwendet, um ein Brillenglas mittels eines der oben beschriebenen direkten oder indirekten Verfahren zu formen.

Die Stempel 12 werden mit Hilfe einer Halterungsvorrichtung 14 gehalten. Die Halterungsvorrichtung 14 kann ferner ausgebildet sein, die Position der Stempel 12 nach dem Einstellen der Form der adaptiven Fläche 12 zu fixieren. Die Halterungsvorrichtung 14 kann entsprechend auch eine Fixiervorrichtung umfassen oder als eine Fixiervorrichtung dienen.

Die Flächenverformungsvorrichtung umfasst einen beweglichen Motor 16, zum Beispiel einen Präzisionsmotor (als ein Beispiel einer Aktuatorvorrichtung) zum einzelnen/seriellen Positionieren der Stempel 12 und eine Steuerungsvorrichtung 18 zum Steuern und/oder Regeln des Motors 16. Der Motor 16 stellt die einzelnen Stempel 12 nacheinander ein und wird nach dem letzten Stempel 12 abgezogen. Dadurch kann eine räumliche Trennung zwischen der adaptiven Fläche 10 mit den Stempeln 12 und dem Motor 16 mit der Steuerungsvorrichtung 18 realisiert werden. Nach dem Abzug kann der Motor 16 zum Einstellen der Form einer anderen adaptiven Fläche verwendet werden.

Die Form der adaptiven Fläche kann optional von einer Sensorvorrichtung 20 überwacht werden. Die Sensorvorrichtung 20 kann zum Beispiel einen Wellenfrontsensor umfassen oder aus einem Wellenfrontsensor bestehen. Die Sensorvorrichtung 20 steht in Signalverbindung mit der Steuerungsvorrichtung 18 und dient als Feedbackgeber an die Steuerungsvorrichtung 20. Die Steuerungsvorrichtung 18 kann den Motor 16 anhand der von der Sensorvorrichtung 20 erfassten Daten steuern und/oder regeln.

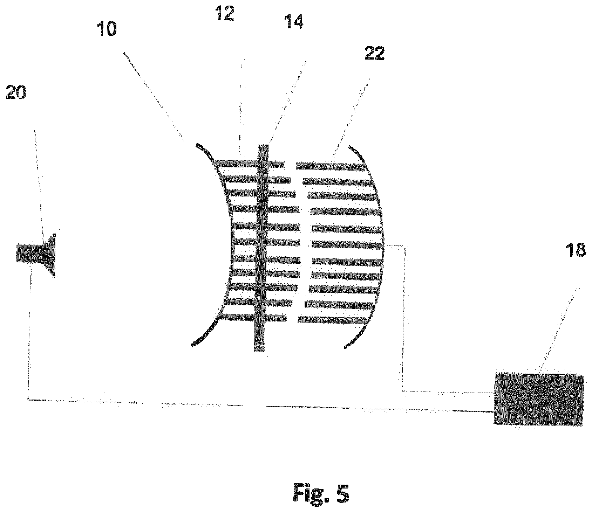

**Figur 5** zeigt eine schematische Darstellung einer zweiten beispielhaften adaptiven Fläche 10 (zum Beispiel in Form einer Membran) und einer entsprechenden Flächenverformungsvorrichtung. In diesem Beispiel umfasst die Flächenverformungsvorrichtung ein Array aus Piezoelementen 22 (als Beispiel einer Aktuatorvorrichtung) zum kollektiven. Positionieren der Stempel 12 und eine Steuerungsvorrichtung 18 zum Steuern und/oder Regeln der Piezoelementen 22. Bei dem in Fig. 5 gezeigten Beispiel ist die Anzahl der Piezoelementen gleich der Anzahl der Stempel (jeder Stempel wird von einem Piezoelement positioniert). Nachdem die Form der adaptiven Fläche 10 eingestellt ist, wird das Array aus Piezoelementen 22 abgezogen beziehungsweise von der adaptiven Fläche 10 mit den Stempeln 12 getrennt und kann zum Einstellen der Form einer anderen adaptiven Fläche verwendet werden.

Die Stempel 12 werden von einer Halterungsvorrichtung 14 gehalten. Wie bei dem in Fig. 4 gezeigten Beispiel kann die Halterungsvorrichtung 14 ausgebildet sein, die Stempel 12 nach dem Einstellen der Form der adaptiven Fläche 10 zu fixieren. Ferner wie bei dem in Figur 4 gezeigten Beispiel, kann die Form der adaptiven Fläche optional von einer Sensorvorrichtung 20 (zum Beispiel von einem Wellenfrontsensor) überwacht werden. Die Steuerungsvorrichtung 18 kann das Array von Piezoelementen 22 anhand der von der Sensorvorrichtung 20 erfassten Daten steuern und/oder regeln.

Die adaptive Fläche 10 mit der eingestellten Form wird anschließend verwendet, um ein Brillenglas mittels eines der oben beschriebenen direkten oder indirekten Verfahren zu formen.

Wie oben beschrieben können eventuell auftretende Verzüge beim (Ab)Gießen des Brillenglases mit unterschiedlichen Methoden bestimmt und vorkompensiert werden. Dies gilt auch für eventuell auftretende Hysterese-Effekte (wie gegebenenfalls bei den obigen Beispielen 2 und 3) sowie für den Einfluss des Gießprozesses auf die Form von beispielswese adaptiver Fläche, Membran und/oder Transferfläche.

Neben dem Abgießen des Brillenglases können je nach Brillenglasmaterial auch andere Techniken wie zum Beispiel Prägen und Spritzgießen verwendet werden.

### Materialien

Nachfolgend werden nicht ausschließliche Beispiele für die verwendeten Materialien angegeben:
Materialien für Brillengläser:
   - Perfalit 1.5 (Chemische Bezeichnung: Polyethylenglycolbisallylcarbonat, Grundlage ist CR 39 (Columbia Resin 39) von PPG, Brechungsindex 1,5, Abbezahl 58),
   - PCM 1.54 (Chemische Bezeichnung: Polyethylenglycoldimethacrylat, Brechungsindex 1,54, Abbezahl 43)
   - Polycarbonat (Brechungsindex 1,59, Abbezahl 29), Perfalit 1.6 (Chemische Bezeichnung: Polythiourethan, Brechnugsindex 1,60, Abbezahl 41)
   - Perfalit 1.67 (Chemische Bezeichnung: Polythiourethan, Brechungsindex 1,67, Abbezahl 32)
   - Perfalit 1.74 (Chemische Bezeichnung: Polythiourethan, Brechungsindex 1,74, Abbezahl etwa 32)
Materialien für Transferschichten:
   - TS56T (3) von Tokuyama (Brechungsindex von 1,49,)
   - IM-9200 von SDC Technologies (Brechkraft zwischen 1,585 und1,605)
   - Transhade von Tokuyama (gegebenenfalls mit Primer (Transhade-SC-P) als Haftvermittler, Brechungsindex 1,54)
   - Hi Guard 1080 von PPG
   - Die als Materialien für Brillengläser aufgeführten Materialien
Materialien für Gießformen:
   - Kronglas (zum Beispiel gehärtetes Kronglas vom Typ CH-W 0991 (S-3) der Barberini GmbH auf Basis von Schott Materialien)
   - Quarzglas ("fused silica")
   - Metalle (z.B. Stahl, Nickel, Nickel-Legierungen)
   - Kunststoffe (z.B. Polycarbonat (PC), Polyamid (PA), Polymethylmethacrylat (PMMA)
Materialien für Trägersubstrate:
   - Die unter Materialien für Brillengläser genannten Materialien
   - Die unter Materialien für Gießformen genannten Materialien

Eine beispielhafte bevorzugte Materialkombination ist Brillenglas: Perfalit 1.6 oder 1.67, Transferschicht: Transshade, Gießform: Kornglas CH-W 0991, Trägersubstrat: Perfalit 1.5.

Grundsätzlich sind verschiedenste Materialien möglich, wie zum Beispiel. Kunststoffe, Gläser oder Metalle sowohl einzeln als auch in Kombination. Die einzelnen Materialein können geschichtet und/oder in der Fläche strukturiert sein.

### Fixieren oder Stabilisieren der adaptiven Fläche

Wie oben beschrieben kann die Form der ausgerichteten adaptiven Fläche zusätzlich fixiert oder stabilisiert werden. Beispielsweise kann die adaptive Fläche als eine flexible Membran ausgebildet sein, die an mehreren bewegbaren Stempeln (zum Beispiel in Form einer Matrix von Stempeln) angrenzt. Die bewegbaren Stempel werden von einer Aktuatorvorrichtung umfassend einen oder mehrere Aktuatoren angetrieben.

Eine Arretierung der Stempel und/oder der Membran kann beispielsweise wie folgt erfolgen:
Beispiel 1: Jeder der Stempel wird durch eine mechanische Fixierung, wie zum Beispiel einer Verklemmung/Bremse, nach Abschluss der Positionierung gehalten. Dies kann zum Beispiel über einen Bremsklotz, welcher gegen die Stempel drückt, geschehen. Alternativ kann jeder Stempel auch über einen Federspannmechanismus arretiert werden.
Beispiel 2: Falls die Stempel als Micrometerschrauben ausgeführt sind, so kann die Reibungskraft der Schraube als Fixierung ausreichen. Eine weitere Fixierung ist in diesem Fall nicht erforderlich. Selbstverständlich kann jedoch eine weitere Fixierung beziehungsweise Arretierung erfolgen.
Beispiel 3: Die Stempel können im Allgemeinen nur über Reibungskräfte gehalten werden, was jedoch sehr starke Kräfte bei der Positionierung erfordert.

Nachfolgend werden beispielhafte Gießformen und Flächenverformungsvorrichtungen beschrieben, welche in einer Vorrichtung und in einem Verfahren zum Herstellen eines Brillenglases verwendet werden können. Wie oben beschrieben, kann die erste Gießform direkt oder indirekt zum Formen (beispielsweise mittels Gießens) des Brillenglases verwendet werden.

Die beispielhafte erste Gießform weist eine dünne Metall- oder Glasfläche auf, welche sich elastisch verformen lässt (die adaptive Fläche). Die Vorderfläche der Metall- oder Glasfläche kommt direkt oder indirekt über eine Vermittlungsschicht in Kontakt mit dem Gießmaterial. Auf der Rückseite der dünnen Metall- oder Glasfläche sind eine Vielzahl von Positionsstiften befestigt. Um die adaptive Fläche und somit die erste Gießform nun in die gewünschte Position zu bringen, wird die erste Gießform mit der Positioniermechanik (als Beispiel einer Aktuatorvorrichtung) einer Flächenverformungsvorrichtung verbunden. Im einfachsten Fall kann die Positioniermechanik eine Matrix aus Linearmotoren oder Piezoelementen sein, gegen welche die frei beweglichen Stifte gepresst werden. Die Linearmotoren werden so lange von einer Steuerungsvorrichtung nachgesteuert, bis die dünne Metall-/Glasschicht auf der anderen Seite der Stifte die gewünschte Form hat. Die Verformung der dünnen Metall-/Glasschicht kann zum Beispiel mit einem Wellenfrontsensor überwacht werden. Die von dem Wellenfrontsensor erfassten Daten können der Steuerungsvorrichtung übermittelt werden, welche die Positioniermechanik anhand der erfassten Daten steuert oder regelt.

Wenn die gewünschte Form der adaptiven Fläche erreicht ist, werden die Stifte gleichzeitig oder nacheinander arretiert und die Gießform wieder von den Motoren oder Piezoelementen getrennt. Jetzt ist die Positioniermechanik bereit, die nächste Gießform auszurichten, während ein Gießwerkzeug mit der bereits ausgerichteten Gießform mit Kunststoff gefüllt und ausgehärtet wird.

Alternativ können die Stifte auch als Micrometer/Feingewindeschrauben ausgeführt sein, welche von einem oder mehreren Motoren in ihrer Länge eingestellt werden. Die höchste Prozessgeschwindigkeit kann dabei mit einer 1-zu-1 Zuordnung von einem Motor pro Schraube erreicht werden. Die niedrigsten Investitionskosten können bei nur einem Motor, welcher sukzessive alle Schrauben einzeln nacheinander positioniert erreicht werden.

Die ausgerichteten und fixierten Gießformen können (kurzfristig) gesammelt, befüllt und dann in einer Charge ausgehärtet werden. Dies ist insbesondere förderlich, da der Aushärteprozess typischerweise unter kontrollierten Umweltbedingungen (Feuchtigkeit, UV-Licht und Temperatur) in Chargen von mehreren Gläsern in speziellen Kammern erfolgt.

Nach dem Stand der Technik müssten diese Kammern komplett mit den vollständigen Gießformen umfassend sowohl die Membran als auch die Motorik bestückt werden. Dies erfordert eine sehr große Anzahl von teuren und komplexen Gießformen. Weiterhin stellen die Aushärtebedingungen Anforderungen (z.B. hinsichtlich der Umgebungstemperatur, beispielsweise 100-120°C und Tempertaturänderungen), die von den Aktuatoren (wie zum Beispiel von den Linearmotoren oder Piezoelementen) und der Elektronik der eingesetzten Flächenverformungsvorrichtung nicht oder nur unter hohem zusätzlichem Aufwand erfüllt werden können. Die Anpassung der einzelnen Gießformen und insbesondere der empfindlichen Elektronik der Aktuatoren an die besonderen Umweltbedingungen während des Aushärteprozesses erhöht wesentlich die Kosten und die Komplexität der einzelnen Gießformen. Des Weiteren nehmen die Motor- oder Piezoeinheiten unnötig viel Platz in den Aushärtekammern weg. Somit ist es erforderlich, entweder größere Aushärtekammern zu verwenden und/oder den Durchsatz des Aushärteprozesses zu verringern.

Die gemäß der Erfindung vorgeschlagene (räumliche) Trennung der ersten Gießform und der zur Verformung der adaptiven Fläche eingesetzten Flächenverformungsvorrichtung und insbesondere der Aktuatorvorrichtung löst die oben genannten technischen Problem des Standes der Technik und ermöglicht eine effiziente und wirtschaftliche Herstellung von Brillengläsern mit Hilfe von adaptiven Flächen.

### Vorhalten von Gießschrumpf

Wie oben beschrieben, bringt mit dem Aushärten verbundene Volumenverringerung des Materials Verformungen mit sich (sog. Gießschrumpf), welche Auswirkungen auf die zu erzeugende Fläche haben können. Die daraus resultierenden Abweichungen der tatsächlichen Flächen von Soll-Flächen können wie folgt reduziert werden:
Beispiel 1. Verwendung von flexiblen Gießpaketen: Die Verbindung zwischen den beiden Gießformen des verwendeten Gießpakets kann flexibel ausgeführt werden. Insbesondere kann die Verbindung zwischen den beiden Gießformen derart gestaltet werden, dass sich der Abstand zwischen den Gießformen entsprechend dem Gießschrumpf verringert. Damit führt der Gießschrumpf hauptsächlich zu einer Verringerung der Dicke des Gießprodukts. Die Einflüsse auf die Flächenform lassen sich damit deutlich verringern. Die daraus resultierende Dickenänderung kann vorkompensiert (das heißt einkalkuliert und vorgehalten) werden.
Beispiel 2. Die Gegengießform (d.h. die der ersten Gießform bzw. der Membran bzw. der Transferschicht gegenüberstehende Gießform) des verwendeten Gießpakets kann entsprechend verformbarer ausgeführt werden, so dass sich hauptsächlich diese entsprechend dem Gießschrumpf verformt. Beispielsweise kann eine sphärische Form aus speziellem Glas verwendet werden, bei der durch den Gießschrumpf primär der globale Radius geändert wird. Die daraus resultierende Formänderung kann vorkompensiert werden.
Beispiel 3. In der ersten Gießform oder Membran oder Transferschicht wird der gegebenenfalls trotz Arretierung auftretende Gießschrumpf vorkompensiert. Dies ist besonders dann relevant, wenn Gegengießform und Verbindung sehr starr ausgeführt werden (müssen) und kaum Verformungen aufnehmen. Dies kann (insbesondere bei Gießprodukten mit lokal stark unterschiedlichen Dicken) auch nur lokal erfolgen.

Weiterhin können auch zwei oder alle drei Lösungen kombiniert werden. Insbesondere bei Gießprodukten mit lokal stark unterschiedlichen Dicken, kann es sinnvoll sein, die Hauptlast nach Beispiel 1 oder 2 abzufangen und an Stellen hoher lokalen Dicken (großes lokales Volumen) dort lokal zusätzliche Veränderungen gemäß Beispiel 3 vorzukompensieren.

Die für die Vorkompensation notwendigen Werte (Dicken und/oder Flächenkorrekturen) können mittels analytischer Berechnung, mathematischer Modellierung, experimentell mit oder ohne maschinelles Lernen oder mittels eines anderen geeigneten Verfahrens ermittelt werden.

### Analytische Berechnung

Bei einer Verwendung von flexiblen Gießwerkzeugen (wie in den Beispielen 1 und 2) kann die Veränderung der Dicke des Gießprodukts und/oder die Formänderung der flexiblen Fläche (wie zum Beispiel die Veränderung des Krümmungsradius) auf Basis der erwarteten Volumenänderung, der angreifenden Kräfte und der Materialparameter von Verbindung und/oder Gegengießform mit den aus der Mechanik bekannten Formeln analytisch berechnet werden;

### Mathematische Modellierung

Der Aushhärtungsprozess und die beteiligten Komponenten können mit den bekannten Methoden (zum Beispiel mit Hilfe von finiten Elementen) mathematisch oder numerisch simuliert werden.

### Experimentell

Bei einer experimentellen Bestimmung kann ein Modell mit mindestens einer freien Variablen aufgestellt werden, wobei die zumindest eine freie Variable anhand des Ergebnisses von mindestens einer Versuchsaushärtung belegt werden kann.

### Maschinelles Lernen

Es ist ebenfalls möglich, Modelle beziehungsweise Ansätze des maschinellen Lernens zu verwenden. Mittels Verfahren des maschinellen Lernens können beispielswese die Ergebnisse mehrerer Gießversuche ausgewertet werden und die entsprechenden Modelle trainiert werden. Beispielsweise kann anhand der Ergebnisse mehrerer Gießversuche ein neuronales Netzwerk trainiert werden.

### Bezugszeichenliste

- 10: adaptive Fläche
- 12: bewegliche Stempel (zum Beispiel Mikrometerschrauben)
- 14: Halterungsvorrichtung (optional inkl. Fixiervorrichtung)
- 16: beweglicher Motor zum einzelnen/seriellen Positionieren der Stempel (als Beispiel einer Aktuatorvorrichtung)
- 18: Steuerungsvorrichtung zum Steuern und/oder Regeln der Aktuatorvorrichtung
- 20: Sensorvorrichtung (umfassend zum Beispiel einen Wellenfrontsensor)
- 22: Array aus Piezoelementen zum Positionieren der Stempel (als Beispiel einer Aktuatorvorrichtung)
- S11-S40: Verfahrensschritte

## Patentansprüche

1. Verfahren zum Herstellen eines Brillenglases, umfassend:
Erfassen von Daten einer zu erzeugenden Fläche des herzustellenden Brillenglases;
Bereitstellen einer ersten Gießform für das herzustellende Brillenglas, wobei die erste Gießform eine erste Gießformfläche aufweist, deren Form in Abhängigkeit von den Daten der zu erzeugenden Oberfläche des Brillenglases bestimmt wird;
Formen des Brillenglases aus einem aushärtbaren Brillenglasmaterial unter Verwendung der ersten Gießform,
wobei das Bereitstellen der ersten Gießform umfasst:
Bestimmen der Form einer adaptiven Fläche (10) anhand der Daten der zu erzeugenden Oberfläche des Brillenglases;
Erzeugen der adaptiven Fläche (10) mit der bestimmten Form mit Hilfe einer Flächenverformungsvorrichtung;
Verwenden der adaptiven Fläche (10), um die erste Gießformfläche zu erzeugen oder zu bilden;
wobei das Gießverfahren umfasst:
Aushärten des Brillenglasmaterials, **dadurch gekennzeichnet, dass** während des Aushärtens die Flächenverformungsvorrichtung von der ersten Gießform getrennt ist.

2. Verfahren nach Anspruch 1,
wobei die adaptive Fläche (10) zumindest einen Teil der ersten Gießformfläche bildet; oder
wobei die adaptive Fläche (10) zum Erzeugen einer Transferfläche einer Transferschicht verwendet wird, wobei die Transferfläche zumindest einen Teil der ersten Gießformfläche bildet.

3. Verfahren nach einem der vorangegangenen Ansprüche, wobei
das Erzeugen oder das Bilden der zumindest einen adaptiven Fläche (10) ein Fixieren oder Stabilisieren der Form der adaptiven Fläche (10) umfasst; und
wobei optional die adaptive Fläche (10) die Oberfläche einer verformbaren Membran bildet, und
wobei das Fixieren oder Stabilisieren der Form der adaptiven Fläche (10) ein Fixieren oder Stabilisieren der Form der Membran mittels eines thermischen Prozesses umfasst; und/oder
wobei die Membran in Kontakt mit einer Mehrzahl von bewegbaren Stempeln (12) steht, und das Fixieren oder Stabilisieren der Form der adaptiven Fläche (10) ein Arretieren der Stempel (12) umfasst.

4. Verfahren nach einem der vorangegangenen Ansprüche, wobei das Bestimmen der Form der adaptiven Fläche (10):
Bestimmen einer Grundform für die zumindest eine adaptive Fläche (10); und
Abändern zumindest eines Teils der Grundform in Abhängigkeit von den Daten der zu erzeugenden Oberfläche des Brillenglases
umfasst.

5. Verfahren nach einem der vorangegangenen Ansprüche, ferner umfassend
Kompensieren eines während des Aushärtens des Brillenglasmaterials und/oder des Materials einer Transferschicht auftretenden Gießschrumpfs.

6. Verfahren nach Anspruch 5, wobei das Kompensieren des Gießschrumpfs
ein Bestimmen eines zu erwartenden Gießschrumpfs des Brillenglasmaterials während des Aushärtens des Brillenglasmaterials und/oder eines zu erwartenden Gießschrumpfs des Materials einer Transferschicht während des Aushärtens des Materials der Transferschicht, und
ein Vorkompensieren des zu erwartenden Gießschrumpfs beim Bestimmen der Form der adaptiven Fläche (10) umfasst.

7. Verfahren nach Anspruch 5 oder 6, ferner umfassend Bereitstellen eines Gießformwerkzeugs umfassend i) die erste Gießform oder eine Gießform für eine Transferschicht und ii) eine zweite Gießform mit einer zweiten Gießformfläche,
wobei das bereitgestellte Gießformwerkzeug derart ausgebildet ist, dass der Abstand zwischen i) der ersten Gießform oder der Gießform für die Transferschicht und ii) der zweiten Gießform entsprechend dem Gießschrumpf reduzierbar ist, und wobei das Kompensieren des Gießschrumpfs ein Vorkompensieren einer aus der Reduktion des Abstands zwischen den Gießformen resultierenden Dickenreduktion des Gießprodukts beim Bestimmen der Form der adaptiven Fläche (10) umfasst; und/oder
wobei die Form der zweiten Gießformfläche entsprechend dem Gießschrumpf veränderbar ist, und wobei das Kompensieren des Gießschrumpfs ein Vorkompensieren der Formveränderung der zweiten Gießformfläche beim Bestimmen der Form der adaptiven Fläche (10) umfasst.

8. Vorrichtung zum Herstellen eines Brillenglases, umfassend;
eine Erfassungsvorrichtung zum Erfassen von Daten einer zu erzeugenden Oberfläche des herzustellenden Brillenglases;
eine erste Gießform, wobei die erste Gießform eine erste Gießformfläche aufweist, deren Form anhand der Daten der zu erzeugenden Oberfläche bestimmt ist;
eine Gießformflächenerzeugungsvorrichtung zum Erzeugen oder Bilden der ersten Gießformfläche, wobei die Gießformflächenerzeugungsvorrichtung umfasst:
eine adaptive Fläche (10);
eine Flächenformbestimmungsvorrichtung zum Bestimmen der Form der adaptiven Fläche anhand der Daten der zu erzeugenden Oberfläche; und
eine Flächenverformungsvorrichtung zum Verformen der adaptiven Fläche entsprechend der bestimmten Form;
**dadurch gekennzeichnet, dass**
die Vorrichtung zum Herstellen eines Brillenglases weiter eine Trennvorrichtung zum Abtrennen der Flächenverformungsvorrichtung während des Aushärtens von der ersten Gießform umfasst.

9. Vorrichtung nach Anspruch 8,
wobei die Flächenverformungsvorrichtung trennbar/lösbar mit der adaptiven Fläche (10) verbunden ist; und/oder
wobei die Vorrichtung ferner eine Transferfläche einer Transferschicht umfasst, wobei die Transferfläche im Wesentlichen ein Negativ der adaptiven Fläche (10) ist.

10. Vorrichtung nach Anspruch 9, ferner umfassend
eine Fixiereinrichtung (14) zum Fixieren oder Stabilisieren der Form der adaptiven Fläche (10).

11. Vorrichtung nach Anspruch 10, wobei die adaptive Fläche (10) die Oberfläche einer verformbaren Membran bildet, und
wobei die Fixiereinrichtung (14) ausgebildet ist, die Form der Membran mittels eines thermischen Prozesses zu fixieren oder stabilisieren; und/oder
die Membran in Kontakt mit einer Mehrzahl von bewegbaren Stempeln (12) steht, und die Fixiereinrichtung (14) ausgebildet ist, die Stempel (12) zu arretieren.

12. Vorrichtung nach einem der Ansprüche 8 bis 11, wobei die Flächenbestimmungsvorrichtung ferner:
eine Grundformbestimmungseinrichtung zum Bestimmen einer Grundform für die zumindest eine adaptive Fläche (10); und
eine Grundformänderungseinrichtung zum Abändern zumindest eines Teils der Grundform anhand der Daten der zu erzeugenden Oberfläche
umfasst.

13. Vorrichtung nach einem der Ansprüche 8 bis 12 ferner umfassend eine Kompensationsvorrichtung zum Kompensieren eines während des Aushärtens des Brillenglasmaterials und/oder des Materials einer Transferschicht auftretenden Gießschrumpfs.

14. Vorrichtung nach Anspruch 13, wobei die Kompensationsvorrichtung derart ausgebildet ist, einen zu erwartenden Gießschrumpfs des Brillenglasmaterials während des Aushärtens des Brillenglasmaterials und/oder des Materials einer Transferschicht zu bestimmen und den zu erwartenden Gießschrumpf beim Bestimmen der Form der adaptiven Fläche (10) zu berücksichtigen.

15. Vorrichtung nach Anspruch 13 oder 14, ferner umfassend ein Gießformwerkzeug umfassend i) die erste Gießform oder eine Gießform für eine Transferschicht und ii) eine zweite Gießform,
wobei das Gießformwerkzeug derart ausgebildet ist, dass der Abstand zwischen i) der ersten Gießform oder der Gießform für die Transferschicht und ii) der zweiten Gießform entsprechend dem Gießschrumpf reduzierbar ist, und wobei die Kompensationsvorrichtung derart ausgebildet ist, eine aus der Reduktion des Abstands zwischen den Gießformen resultierenden Dickenreduktion des Gießprodukts beim Bestimmen der Form der adaptiven Fläche (10) zu berücksichtigen; und/oder
wobei die zweite Gießform eine Gießformfläche aufweist, deren Form entsprechend dem Gießschrumpf veränderbar ist, und wobei die Kompensationsvorrichtung derart ausgebildet ist, die Formveränderung der Gießformfläche der zweiten Gießform beim Bestimmen der Form der adaptiven Fläche (10) zu berücksichtigen.

## Claims

1. A method for manufacturing an eyeglass lens, comprising:
acquiring data regarding a surface to be formed on the eyeglass lens to be manufactured;
providing a first mold for the eyeglass lens to be manufactured, wherein the first mold has a first mold surface whose shape is determined based on the data regarding the surface to be formed on the eyeglass lens;
molding the eyeglass lens from a curable eyeglass lens material using the first mold,
wherein the step of providing the first mold comprises:
determining the shape of an adaptive surface (10) based on the data of the surface to be formed on the eyeglass lens;
generating the adaptive surface (10) with the determined shape using a surface-shaping device;
using the adaptive surface (10) to create or form the first mold surface; wherein the casting process comprises:
curing the eyeglass lens material, **characterized in that** during curing, the surface deformation device is separated from the first mold.

2. The method according to claim 1,
wherein the adaptive surface (10) forms at least a portion of the first mold surface; or
wherein the adaptive surface (10) is used to create a transfer surface of a transfer layer, wherein the transfer surface forms at least a portion of the first mold surface.

3. A method according to any of the preceding claims, wherein
the creation or formation of the at least one adaptive surface (10) comprises fixing or stabilizing the shape of the adaptive surface (10); and
wherein, optionally, the adaptive surface (10) forms the surface of a deformable membrane, and
wherein fixing or stabilizing the shape of the adaptive surface (10) comprises fixing or stabilizing the shape of the membrane by means of a thermal process; and/or
wherein the membrane is in contact with a plurality of movable dies (12), and fixing or stabilizing the shape of the adaptive surface (10) comprises locking the dies (12) in place.

4. A method according to any one of the preceding claims, wherein determining the shape of the adaptive surface (10) comprises:
determining a base shape for the at least one adaptive surface (10); and
modifying at least a portion of the base shape based on the data of the eyeglass lens surface to be produced.

5. A method according to any one of the preceding claims, further comprising compensating for casting shrinkage occurring during the curing of the eyeglass lens material and/or the material of a transfer layer.

6. The method according to claim 5, wherein the compensation for casting shrinkage comprises determining an expected casting shrinkage of the eyeglass lens material during the curing of the eyeglass lens material and/or an expected casting shrinkage of the material of a transfer layer during the curing of the transfer layer material,
and pre-compensating for the expected casting shrinkage when determining the shape of the adaptive surface (10).

7. The method according to claim 5 or 6, further comprising providing a casting mold tool comprising i) the first casting mold or a casting mold for a transfer layer and ii) a second casting mold with a second casting mold surface,
wherein the provided casting mold assembly is configured such that the distance between i) the first casting mold or the casting mold for the transfer layer and ii) the second casting mold can be reduced in accordance with the casting shrinkage, and wherein compensating for the casting shrinkage comprises pre-compensating for a reduction in the thickness of the cast product resulting from the reduction in the distance between the molds when determining the shape of the adaptive surface (10); and/or
wherein the shape of the second casting mold surface can be varied in accordance with the casting shrinkage, and wherein compensating for the casting shrinkage comprises pre-compensating for the shape change of the second casting mold surface when determining the shape of the adaptive surface (10).

8. An apparatus for manufacturing an eyeglass lens, comprising:
a detection device for detecting data of a surface to be formed on the eyeglass lens to be manufactured;
a first mold, wherein the first mold has a first mold surface whose shape is determined based on the data of the surface to be formed;
a mold surface forming device for forming the first mold surface, wherein the mold surface forming device comprises:
an adaptive surface (10);
a surface shape determination device for determining the shape of the adaptive surface based on the data of the surface to be formed; and
a surface deformation device for deforming the adaptive surface according to the determined shape;
**characterized in that** the apparatus for manufacturing an eyeglass lens further comprises a separation device for separating the surface deformation device from the first mold during curing.

9. An apparatus according to claim 8,
wherein the surface deformation device is detachably connected to the adaptive surface (10); and/or wherein the device further comprises a transfer surface of a transfer layer, wherein the transfer surface is essentially a negative of the adaptive surface (10).

10. A device according to claim 9, further comprising
a fixing means (14) for fixing or stabilizing the shape of the adaptive surface (10).

11. A device according to claim 10, wherein the adaptive surface (10) forms the surface of a deformable membrane, and
wherein the fixing means (14) is configured to fix or stabilize the shape of the membrane by means of a thermal process; and/or
the membrane is in contact with a plurality of movable punches (12), and the fixing means (14) is configured to lock the punches (12) in place.

12. A device according to any one of claims 8 through 11, wherein the surface-determining device further comprises:
a basic-shape-determining means for determining a basic shape for the at least one adaptive surface (10); and
a basic-shape-modifying means for modifying at least a portion of the basic shape based on data regarding the surface to be produced.

13. A device according to any one of claims 8 through 12, further comprising a compensation device for compensating for casting shrinkage occurring during the curing of the lens material and/or the material of a transfer layer.

14. A device according to claim 13, wherein the compensation device is configured to determine an expected casting shrinkage of the eyeglass lens material during the curing of the eyeglass lens material and/or the material of a transfer layer, and to take the expected casting shrinkage into account when determining the shape of the adaptive surface (10).

15. A device according to claim 13 or 14, further comprising a casting mold tool comprising i) the first casting mold or a casting mold for a transfer layer and ii) a second casting mold,
wherein the casting mold tool is configured such that the distance between i) the first casting mold or the casting mold for the transfer layer and ii) the second mold can be reduced in accordance with the casting shrinkage, and wherein the compensation device is configured to account for a reduction in the thickness of the cast product resulting from the reduction in the distance between the molds when determining the shape of the adaptive surface (10); and/or
wherein the second casting mold has a casting mold surface whose shape can be varied in accordance with the casting shrinkage, and wherein the compensation device is configured to account for the shape change of the casting mold surface of the second casting mold when determining the shape of the adaptive surface (10).

## Revendications

1. Procédé de fabrication d'un verre de lunettes, comprenant :
la collecte de données relatives à une surface à réaliser du verre de lunettes à fabriquer ;
la mise à disposition d'un premier moule pour le verre de lunettes à fabriquer, ledit premier moule présentant une première surface de moulage dont la forme est déterminée en fonction des données relatives à la surface à réaliser du verre de lunettes ;
le moulage du verre de lunettes à partir d'un matériau de verre de lunettes durcissable à l'aide du premier moule,
la mise à disposition du premier moule comprenant :
la détermination de la forme d'une surface adaptative (10) à partir des données relatives à la surface à réaliser du verre de lunettes ;
la création de la surface adaptative (10) ayant la forme déterminée à l'aide d'un dispositif de déformation de surface ;
l'utilisation de la surface adaptative (10) pour créer ou former la surface du premier moule ;
le procédé de moulage comprenant :
le durcissement du matériau de verre de lunettes, **caractérisé en ce que**, pendant le durcissement, le dispositif de déformation de surface est séparé du premier moule.

2. Procédé selon la revendication 1,
dans lequel la surface adaptative (10) forme au moins une partie de la première surface de moule ; ou
dans lequel la surface adaptative (10) est utilisée pour créer une surface de transfert d'une couche de transfert, ladite surface de transfert formant au moins une partie de la première surface de moule.

3. Procédé selon l'une des revendications précédentes, dans lequel
la création ou la formation de ladite au moins une surface adaptative (10) comprend une fixation ou une stabilisation de la forme de la surface adaptative (10) ; et
dans lequel, de manière facultative, la surface adaptative (10) forme la surface d'une membrane déformable, et
dans lequel la fixation ou la stabilisation de la forme de la surface adaptative (10) comprend la fixation ou la stabilisation de la forme de la membrane au moyen d'un procédé thermique ; et/ou
dans lequel la membrane est en contact avec une pluralité de poinçons mobiles (12), et la fixation ou la stabilisation de la forme de la surface adaptative (10) comprend le blocage des poinçons (12).

4. Procédé selon l'une des revendications précédentes, dans lequel la détermination de la forme de la surface adaptative (10) :
comprend la détermination d'une forme de base pour ladite au moins une surface adaptative (10) ; et
comprend la modification d'au moins une partie de la forme de base en fonction des données relatives à la surface du verre de lunettes à produire.

5. Procédé selon l'une des revendications précédentes, comprenant en outre la compensation d'un retrait de coulée se produisant pendant le durcissement du matériau du verre de lunettes et/ou du matériau d'une couche de transfert.

6. Procédé selon la revendication 5, dans lequel la compensation du retrait de coulée comprend la détermination d'un retrait de coulée prévisible du matériau du verre de lunettes pendant le durcissement de ce matériau et/ou d'un retrait de coulée prévisible du matériau d'une couche de transfert pendant le durcissement de ce matériau,
et
une pré-compensation du retrait de coulée prévu lors de la détermination de la forme de la surface adaptative (10).

7. Procédé selon la revendication 5 ou 6, comprenant en outre la mise à disposition d'un outil de moulage comprenant i) le premier moule ou un moule pour une couche de transfert et ii) un deuxième moule présentant une deuxième surface de moulage,
l'outil de moulage ainsi mis à disposition étant conçu de telle sorte que la distance entre i) le premier moule ou le moule destiné à la couche de transfert et ii) le deuxième moule puisse être réduite en fonction du retrait de moulage, et dans lequel la compensation du retrait de moulage comprend une compensation préalable de la réduction d'épaisseur du produit moulé résultant de la réduction de la distance entre les moules lors de la détermination de la forme de la surface adaptative (10) ; et/ou
dans lequel la forme de la surface du deuxième moule peut être modifiée en fonction du retrait de coulée, et dans lequel la compensation du retrait de coulée comprend une pré-compensation de la modification de forme de la surface du deuxième moule lors de la détermination de la forme de la surface adaptative (10).

8. Dispositif de fabrication d'un verre de lunettes, comprenant :
un dispositif de détection destiné à détecter des données relatives à une surface à générer du verre de lunettes à fabriquer ;
un premier moule, ledit premier moule présentant une première surface de moule dont la forme est déterminée à partir des données de la surface à générer ;
un dispositif de création de surface de moule destiné à créer ou à former la première surface de moule, ledit dispositif de création de surface de moule comprenant :
une surface adaptative (10) ;
un dispositif de détermination de la forme de la surface destiné à déterminer la forme de la surface adaptative sur la base des données de la surface à créer ; et
un dispositif de déformation de surface destiné à déformer la surface adaptative conformément à la forme déterminée ;
**caractérisé en ce que** le dispositif de fabrication d'un verre de lunettes comprend en outre un dispositif de séparation destiné à séparer le dispositif de déformation de surface du premier moule pendant le durcissement.

9. Dispositif selon la revendication 8,
dans lequel le dispositif de déformation de surface est relié de manière séparable/amovible à la surface adaptative (10) ; et/ou dans lequel le dispositif comprend en outre une surface de transfert d'une couche de transfert, ladite surface de transfert étant essentiellement un négatif de la surface adaptative (10).

10. Dispositif selon la revendication 9, comprenant en outre
un dispositif de fixation (14) destiné à fixer ou à stabiliser la forme de la surface adaptative (10).

11. Dispositif selon la revendication 10, dans lequel la surface adaptative (10) forme la surface d'une membrane déformable, et
dans lequel le dispositif de fixation (14) est conçu pour fixer ou stabiliser la forme de la membrane au moyen d'un procédé thermique ; et/ou
la membrane est en contact avec une pluralité de poinçons mobiles (12), et le dispositif de fixation (14) est conçu pour bloquer les poinçons (12).

12. Dispositif selon l'une des revendications 8 à 11, dans lequel le dispositif de détermination de surface comprend en outre :
un moyen de détermination de forme de base destiné à déterminer une forme de base pour ladite au moins une surface adaptative (10) ; et
un moyen de modification de forme de base destiné à modifier au moins une partie de la forme de base sur la base des données de la surface à générer.

13. Dispositif selon l'une des revendications 8 à 12, comprenant en outre un dispositif de compensation destiné à compenser un retrait de moulage survenant pendant le durcissement du matériau du verre de lunettes et/ou du matériau d'une couche de transfert.

14. Dispositif selon la revendication 13, dans lequel le dispositif de compensation est conçu pour déterminer un retrait de coulée prévisible du matériau de verre de lunettes pendant le durcissement de ce matériau et/ou du matériau d'une couche de transfert, et pour prendre en compte ce retrait de coulée prévisible lors de la détermination de la forme de la surface adaptative (10).

15. Dispositif selon la revendication 13 ou 14, comprenant en outre un outil de moulage comprenant i) le premier moule ou un moule destiné à une couche de transfert et ii) un deuxième moule,
l'outil de moulage étant conçu de telle sorte que la distance entre i) le premier moule ou le moule destiné à la couche de transfert et ii) le deuxième moule puisse être réduite en fonction du retrait de coulée, et dans lequel le dispositif de compensation est conçu pour tenir compte d'une réduction d'épaisseur du produit moulé, résultant de la réduction de la distance entre les moules, lors de la détermination de la forme de la surface adaptative (10) ; et/ou
dans lequel le deuxième moule présente une surface de moulage dont la forme est modifiable en fonction du retrait de coulée, et dans lequel le dispositif de compensation est conçu pour prendre en compte la modification de forme de la surface de moulage du deuxième moule lors de la détermination de la forme de la surface adaptative (10).
